(19) Europäisches Patentamt
European Patent Office
Office européen des brevets

(11) **EP 2 455 253 A2**

(12) **EUROPEAN PATENT APPLICATION**

(43) Date of publication:
**23.05.2012 Bulletin 2012/21**

(51) Int Cl.:
**B60L 11/18** (2006.01)   **H02J 5/00** (2006.01)
**H01F 38/14** (2006.01)

(21) Application number: **11186743.8**

(22) Date of filing: **26.10.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: 27.10.2010 JP 2010240263<br>31.08.2011 JP 2011188236<br>27.10.2010 JP 2010240264<br>28.01.2011 JP 2011015877<br>30.06.2011 JP 2011146495<br>30.06.2011 JP 2011146496<br><br>(71) Applicant: **Equos Research Co., Ltd.**<br>**Chiyoda-ku**<br>**Tokyo 101-0021 (JP)** | (72) Inventors:<br>• **Yamakawa, Hiroyuki**<br>**Chiyoda-ku, Tokyo 101-0021 (JP)**<br>• **Ito, Yasuo**<br>**Chiyoda-ku, Tokyo 101-0021 (JP)**<br>• **Gorai, Naoki**<br>**Chiyoda-ku, Tokyo 101-0021 (JP)**<br>• **Miyagi, Kei**<br>**Chiyoda-ku, Tokyo 101-0021 (JP)**<br>• **Sugawara, Takashi**<br>**Chiyoda-ku, Tokyo 101-0021 (JP)**<br>• **Shimokawa, Shigenori**<br>**Chiyoda-ku, Tokyo 101-0021 (JP)**<br><br>(74) Representative: **TBK**<br>**Bavariaring 4-6**<br>**80336 München (DE)** |

(54) **Electric power transmission system and antenna**

(57)    An electric power transmission system includes: a transmitting-side system that includes switching elements (SW1 and SW2) that convert a direct-current voltage to an alternating-current voltage and that output the alternating-current voltage and a transmitting-side magnetic resonance antenna unit (120) that has a first inductor (121) and a first capacitor (122) directly coupled to each other and to which the output alternating-current voltage is input; and a receiving-side system that includes a second inductor (221) and a second capacitor (222) directly coupled to each other and that resonates with the transmitting-side magnetic resonance antenna unit (120) via electromagnetic field to thereby receive electric energy output from the transmitting-side magnetic resonance antenna unit (120).

FIG.1

**Description**

BACKGROUND OF THE INVENTION

1. Field of the Invention

The invention relates to a wireless power transmission system that uses a magnetic resonance antenna according to a magnetic resonance method and an antenna.

2. Description of Related Art

In recent years, the technology to wirelessly transmit electric power (electric energy) without using a power supply cable or the like has been actively developed. Among various types of methods of wirelessly transmitting electric power, there is a technology called magnetic resonance method, which has received widespread attention. The magnetic resonance method was proposed by a research group of Massachusetts Institute of Technology in 2007 and the related art is described in, for example, Published Japanese Translation of PCT Application No. 2009-501510 (JP-A-2009-501510).

In the magnetic resonance wireless power transmission system, the resonance frequency of a transmitting-side magnetic resonance antenna and the resonance frequency of a receiving-side magnetic resonance antenna are set equal to each other, whereby energy is efficiently transmitted from the transmitting-side magnetic resonance antenna to the receiving-side magnetic resonance antenna. One of the advantages is that the distance, over which the electric power is transmitted, is several dozen centimeters to several meters.

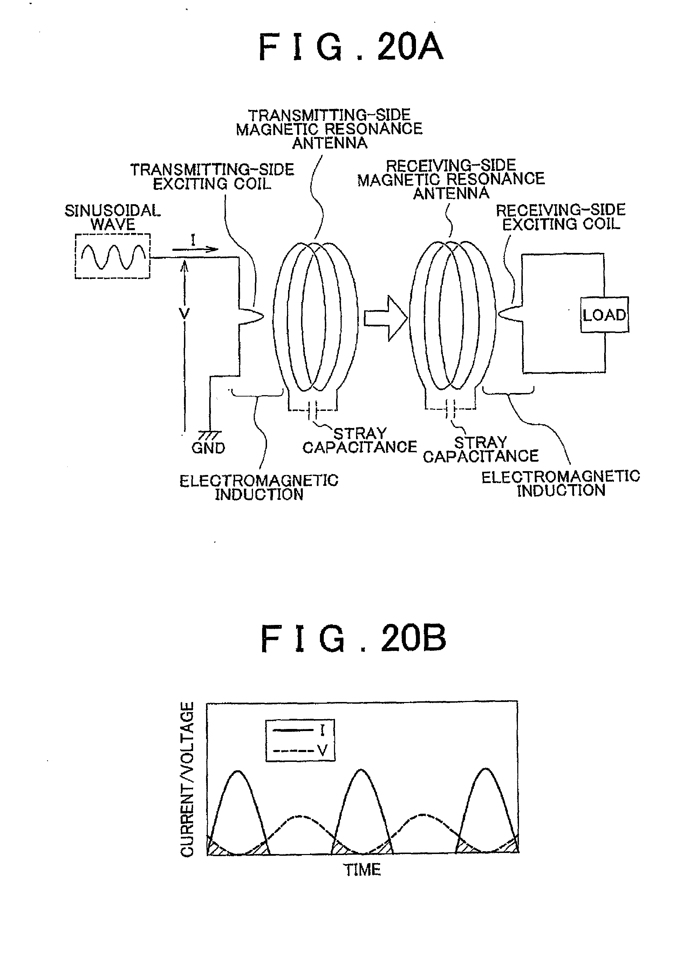

Here, the outline of an existing wireless power transmission system will be described. FIG. 20A and FIG. 20B are diagrams for illustrating the existing wireless power transmission system. FIG. 20A is a diagram that shows the schematic system configuration of the existing wireless power transmission system. In the existing system, as a sinusoidal wave voltage is input to a transmitting-side exciting coil, a transmitting-side magnetic resonance antenna is excited by electromagnetic induction. At this time, the transmitting-side magnetic resonance antenna resonates with a receiving-side magnetic resonance antenna, and, as a result, the receiving-side magnetic resonance antenna receives electric energy from the transmitting-side magnetic resonance antenna. The electric energy received by the receiving-side magnetic resonance antenna excites a receiving-side exciting coil coupled to the receiving-side magnetic resonance antenna by electromagnetic induction, and electric power extracted from the receiving-side exciting coil is supplied to a load, or the like. The frequency of the sinusoidal wave voltage in such an existing system is on the order of several MHz to several tens of MHz.

In addition, some specific configurations of an antenna used in the above wireless power transmission system according to the magnetic resonance method have also been proposed so far. For example, Japanese Patent Application Publication No. 2010-74937 (JP-A-2010-74937) describes a noncontact power receiving device that receives electric power from a power transmitting coil that receives electric power from a power supply to transmit electric power. The noncontact power receiving device includes a power receiving coil that receives electric power, transmitted from the power transmitting coil, by electromagnetic resonance, a coil case that accommodates the power receiving coil inside and a capacitor that is arranged outside the coil case and that is electrically connected to the power receiving coil in order to adjust the resonance frequency of the power receiving coil.

Incidentally, in the above described existing power transmission system, a sinusoidal wave voltage is used to excite the coil at the power transmitting side. When a voltage, such as a rectangular wave voltage, other than a sinusoidal wave voltage, is used, the voltage contains a harmonic component in addition to a predetermined frequency, so the harmonic component is reflected, which causes a radiation loss to cause a switching loss and, as a result, the electric power transmission efficiency can be reduced. FIG. 20B is a graph that illustrates a switching loss in the existing wireless power transmission system. In FIG 20B, the solid line indicates the current I of a transmitting-side circuit, and the dotted line indicates the voltage V of the transmitting-side circuit. In the graph, the shaded area corresponds to a switching loss. The existing wireless power transmission system uses a high-frequency amplifier in order to supply the sinusoidal wave, so, as shown in the example of FIG. 20B, periods during which the voltage wave and the current wave overlap result in a switching loss. Thus, in the existing electric power transmission system, a power loss occurs in the high-frequency amplifier at the stage at which the coil at the power transmitting side is excited and, in addition, there occurs a transmission loss due to electromagnetic induction coupling, so the total electric power transmission efficiency from the power transmitting side to the power receiving side deteriorates.

It is conceivable that, for example, a class D amplifier, a class E amplifier, a class F amplifier, or the like, is used in order to suppress a switching loss in the high-frequency amplifier; however, there is a drawback that the circuit configuration becomes complicated and, as a result, manufacturing cost increases.

Moreover, the system includes multi-stages, that is, the transmitting-side exciting coil, the transmitting-side magnetic resonance antenna, the receiving-side magnetic resonance antenna, and the receiving-side exciting coil, so the system becomes ' complex, and it is difficult to make a design that improves the total electric power transmission efficiency in consideration of the mutual transmission characteristics between the coils (or antennas).

In addition, in the antenna used in the existing electric power transmission system, the adjusting capacitor electrically connected to the power receiving coil is arranged outside the coil case that accommodates the power receiving coil.

The electrical node between the capacitor and the power receiving coil has an inductance component. However, with the above described structure, in some cases, an assumed characteristic of the antenna cannot be obtained because of variations in inductance component of the electrical node having an indefinite shape and, as a result, efficient electric power transmission cannot be performed. In addition, the electrical node has a resistance component, and the characteristic of the antenna overall can decrease because of the resistance component, which also prevents efficient electric power transmission.

## SUMMARY OF THE INVENTION

A first aspect of the invention provides an electric power transmission system. The electric power transmission system includes: a transmitting-side system that includes switching elements that convert a direct-current voltage to an alternating-current voltage and that output the alternating-current voltage and a transmitting-side magnetic resonance antenna unit that includes a first inductor and a first capacitor directly coupled to each other and to which the output alternating-current voltage is input; and a receiving-side system that includes a receiving-side magnetic resonance antenna unit that has a second inductor and a second capacitor directly coupled to each other and that resonates with the transmitting-side magnetic resonance antenna unit via electromagnetic field to thereby receive electric energy output from the transmitting-side magnetic resonance antenna unit.

In the electric power transmission system according to the above aspect, the switching elements may constitute an inverter circuit, and the transmitting-side magnetic resonance antenna unit may be directly coupled to the inverter circuit.

In the electric power transmission system according to the above aspect, the receiving-side system may further include a rectifier that rectifies an output from the receiving-side magnetic resonance antenna unit, and the receiving-side, magnetic resonance antenna unit may be directly coupled to the rectifier.

In the electric power transmission system according to the above aspect, the transmitting-side magnetic resonance antenna unit may oscillate by resonance between the first inductor and the first capacitor, and the receiving-side magnetic resonance antenna unit may receive electric energy from the transmitting-side magnetic resonance antenna unit by resonance between the second inductor and the second capacitor.

In the electric power transmission system according to the above aspect, the first inductor of the transmitting-side magnetic resonance antenna unit and the second inductor of the receiving-side magnetic resonance antenna unit may have the same inductive component, and the first capacitor of the transmitting-side magnetic resonance antenna unit and the second capacitor of the receiving-side magnetic resonance antenna unit may have the same capacitive component.

In the electric power transmission system according to the above aspect, the switching elements may convert a direct-current voltage to a rectangular wave alternating-current voltage and output the rectangular wave alternating-current voltage.

In the electric power transmission system according to the above aspect, the switching elements may constitute a half-bridge inverter.

In the electric power transmission system according to the above aspect, the switching elements may constitute a full-bridge inverter.

In the electric power transmission system according to the above aspect, the inverter may operate in a voltage mode.

In the electric power transmission system according to the above aspect, the transmitting-side magnetic resonance antenna unit and the receiving-side magnetic resonance antenna unit may resonate with each other at a frequency of several hundreds of kHz to several thousands of kHz to thereby cause the receiving-side magnetic resonance antenna unit to receive electric energy output from the transmitting-side magnetic resonance antenna unit.

A second aspect of the invention provides an electric power transmission system. The electric power transmission system includes: a transmitting-side system that includes switching elements that convert a direct-current voltage to an alternating-current voltage and that output the alternating-current voltage and a transmitting-side magnetic resonance antenna unit to which the output alternating-current voltage is input; and a receiving-side system that includes a receiving-side magnetic resonance antenna unit that resonates with the transmitting-side magnetic resonance antenna unit via electromagnetic field to thereby receive electric energy output from the transmitting-side magnetic resonance antenna unit, wherein the transmitting-side magnetic resonance antenna unit includes a first inductor having a predetermined inductive component and a first capacitor having a predetermined capacitive component, the inductive component of the transmitting-side magnetic resonance antenna unit is larger than or equal to 50 µH and smaller than or equal to 500 µH, and the capacitive component of the transmitting-side magnetic resonance antenna unit is larger than or equal to 200 pF and smaller than or equal to 3000 pF.

In the electric power transmission system according to the above aspect, a coupling coefficient between the transmitting-side magnetic resonance antenna unit and the receiving-side magnetic resonance antenna unit may be smaller than or equal to 0.3.

A third aspect of the invention provides an antenna. The antenna includes: a base having a first surface and a second surface that is a back in relation to the first surface; a first surface electrically conductive portion that is formed on the first surface of the base and that forms a coil; and a capacitor that is connected to the coil and that is placed on the first surface.

In the antenna according to the above aspect, the first surface electrically conductive portion may have a first surface innermost end portion and a first surface outermost end portion, and the capacitor may be connected to the first surface outermost end portion of the first surface electrically conductive portion that forms the coil.

The antenna according to the above aspect may further include: a second surface electrically conductive portion that is formed on the second surface of the base, that has a second surface innermost end portion and a second surface outermost end portion, that forms a coil and that overlaps with the first surface electrically conductive portion when viewed transparently from the first surface to the second surface; a first through-hole conducting portion that penetrates between the first surface and the second surface to conductively connect the first surface innermost end portion to the second surface innermost end portion; and a second through-hole conducting portion that penetrates between the first surface and the second surface to conductively connect the first surface outermost end portion to the second surface outermost end portion.

A fourth aspect of the invention provides an antenna. The antenna includes: at least two laminated bases; a plurality of electrically conductive portions, each of which has an innermost end portion and an outermost end portion and forms a coil, wherein adjacent two of the plurality of electrically conductive portions are laminated via a corresponding one of the at least two bases; a capacitor that is connected to the outermost end portion of an exposed one of the at least two bases and that is placed on the exposed base; a first through-hole conducting portion that penetrates the at least two bases to conductively connect the innermost end portions of the respective electrically conductive portions to one another; and a second through-hole conducting portion that penetrates the at least two bases to conductively connect the outermost end portions of the respective electrically conductive portions to one another, wherein the plurality of electrically conductive portions all overlap one another when viewed transparently in a direction in which the plurality of electrically conductive portions are laminated.

In the antenna according to the above aspect, a dielectric material of the capacitor may contain at least one selected from the group consisting of a titanium oxide, magnesium titanate, barium titanate and a steatite material.

In the antenna according to the above aspect, the base and the capacitor may be accommodated in a common case.

A fifth aspect of the invention provides an antenna. The antenna includes: an electrically conductive portion that has an innermost end portion and an outermost end portion and that forms a spiral coil; and a capacitor that is fixed to the outermost end portion.

A sixth aspect of the invention provides an antenna. The antenna includes: a base; an electrically conductive portion that is formed on one surface of the base, that has an innermost end portion and an outermost end portion and that forms a coil; and a capacitor that is fixed to the outermost end portion.

In the antenna according to the above aspect, a dielectric material of the capacitor may contain at least one selected from the group consisting of a titanium oxide, magnesium titanate, barium titanate and a steatite material.

In the antenna according to the above aspect, the base and the capacitor may be accommodated in a common case.

With the electric power transmission system according to the above aspects, it is possible to reduce a switching loss, so it is possible to suppress deterioration in the electric power transmission efficiency.

In addition, with the antenna according to the aspects of the invention, the capacitor is fixed to the first surface outermost end portion of the first surface electrically conductive portion that forms the coil. Therefore, with the thus configured antenna according to the above aspects of the invention, there is no variation in reactance component at an electrical node between the coil and the capacitor, and there is no substantial resistance component at an electrical node between the coil and the capacitor, so the characteristic of the antenna is stable, and it is possible to efficiently transmit electric power.

In addition, with the antenna according to the aspects of the invention, the capacitor is fixed to the outermost end portion of the electrically conductive portion that forms the coil. Therefore, with the thus configured antenna according to the above aspects of the invention, there is no variation in reactance component at an electrical node between the coil and the capacitor, and there is no substantial resistance component at an electrical node between the coil and the capacitor, so the characteristic of the antenna is stable, and it is possible to efficiently transmit electric power.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG 1 is a diagram that shows an example in which an electric power transmission system according to an embodiment of the invention is applied to a vehicle charging facility;
FIG. 2 is a diagram that shows an example of control sequence in a vehicle that is a power receiving side and in the charging facility that is a power transmitting side;
FIG. 3 is a diagram that shows the flowchart of charging routine in the charging facility that is the power transmitting side;
FIG. 4 is a diagram that illustrates an electric power transmission unit in the electric power transmission system according to the embodiment of the invention;
FIG. 5 is a timing chart of on-off control over switching elements in the electric power transmission system according to the embodiment of the invention;
FIG. 6 is a graph that shows the correlation between a voltage and a current in the electric power transmission system according to the embodiment of the invention;
FIG. 7 is a diagram that illustrates an electric power transmission unit in an electric power transmission system according to a first alternative embodiment of the invention;
FIG. 8 is a timing chart that shows on-off control over switching elements in the electric power transmission system according to the first alternative embodiment of the invention;
FIG. 9A to FIG. 9C are diagrams that illustrate the circuit configurations when no capacitor is provided for a transmitting-side magnetic resonance antenna unit according to a second alternative embodiment of the invention;
FIG. 10 is a graph that shows measured results of the correlation between a coupling coefficient and a transmission efficiency;
FIG. 11 is an exploded perspective view of a receiving-side magnetic resonance antenna unit according to a first embodiment of the invention;
FIG. 12 is a schematic cross-sectional view that shows how electric power is transferred via the receiving-side magnetic resonance antenna unit according to the first embodiment of the invention;
FIG. 13 is a diagram that illustrates the mounting structure of a capacitor in the receiving-side magnetic resonance antenna unit according to the first embodiment of the invention;
FIG. 14 is a graph that shows an example of the frequency dependence of electric power transmission efficiency when the transmitting-side magnetic resonance antenna unit is brought close to the receiving-side magnetic resonance antenna unit;
FIG. 15 is a diagram that schematically shows the states of current and electric field at a first extremal frequency;
FIG 16 is a diagram that schematically shows the states of current and electric field at a second extremal frequency;
FIG. 17A and FIG 17B are exploded perspective views of a receiving-side magnetic resonance antenna unit according to a second embodiment of the invention;
FIG. 18 is a schematic cross-sectional view that shows how electric power is transferred via the receiving-side magnetic resonance antenna unit according to the second embodiment of the invention;
FIG. 19A and FIG 19B are exploded perspective views of a receiving-side magnetic resonance antenna unit according to a third embodiment of the invention; and
FIG 20A and FIG 20B are diagrams for illustrating an existing wireless power transmission system.

DETAILED DESCRIPTION OF EMBODIMENTS

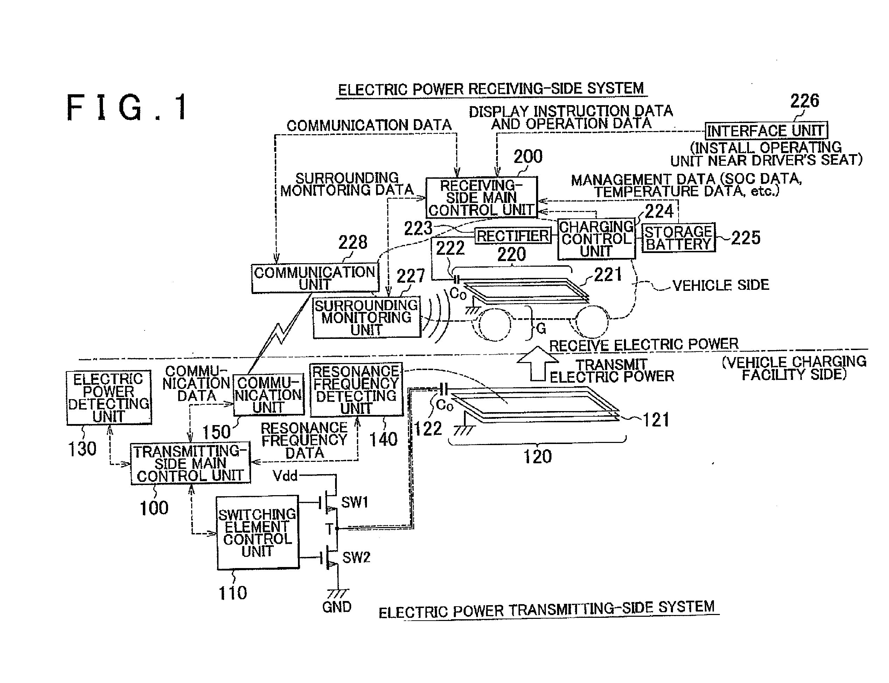

Hereinafter, an embodiment of the invention will be described with reference to the accompanying drawings. FIG 1 is a diagram that shows an example in which an electric power transmission system according to the embodiment of the invention is applied to a vehicle charging facility. The electric power transmission system according to the embodiment of the invention is, for example, suitable for use in a system for charging a vehicle, such as an electric vehicle (EV) and a hybrid electric vehicle (HEV). Then, the following description will be made using the example of application to the vehicle charging facility shown in FIG. 1. Note that the electric power transmission system according to the embodiment of the invention may also be used in electric power transmission of a system other than the vehicle charging facility.
In FIG. 1, the configuration shown below the alternate long and short dashed line is a transmitting-side system, and is the vehicle charging facility in this example. On the other hand, the configuration shown above the alternate long and short dashed line is a receiving-side system, and is a vehicle, such as an electric vehicle, in this example. The above transmitting-side system is, for example, buried in the ground. A vehicle is moved to position a receiving-side magnetic resonance antenna unit 220 mounted on the vehicle with respect to a transmitting-side magnetic resonance antenna unit 120 of the underground transmitting-side system, and then electric power is transmitted and received. The receiving-side magnetic resonance antenna unit 220 of the vehicle is arranged at the bottom of the vehicle.

In the transmitting-side system, a transmitting-side main control unit 100 is a general information processing unit that includes a central processing unit (CPU), a read only memory (ROM), a random access memory (RAM), and the like. The ROM holds programs that is executed by the CPU. The RAM provides a work area of the CPU. The transmitting-side main control unit 100 operates in cooperation with various units (shown in the drawing) connected to the transmitting-side main control unit 100.

A switching element control unit 110 executes on-off control over two switching elements SW1 and SW2 connected in series according to control commands received from the transmitting-side main control unit 100. Here, field-effect transistors are used as the switching element SW1 and the switching element SW2; instead, another arc-suppressing semiconductor element may also be used. A constant-voltage source is connected to the drain of the switching element SW2, and a constant voltage Vdd is applied to the drain of the switching element SW2.

When the switching element SW1 and the switching element SW2 repeatedly turn on or off according to control from the switching element control unit 110 as described above, a rectangular wave having a predetermined frequency is output from a node T between these switching element SW1 and switching element SW2 as an alternating-current voltage. The switching element control unit 110 is able to output a rectangular wave having a different frequency by changing control. That is, owing to control of the switching element control unit 110, a rectangular wave output from the node T between the switching element SW1 and the switching element SW2 may be swept in a predetermined frequency range. Note that, in the present embodiment, the frequency of the rectangular wave generated by switching of the switching element SW1 and switching element SW2 ranges from about several hundreds of kHz to about several thousands of kHz. Note that, in the present embodiment, a direct-current voltage from the constant-voltage source is controlled so as to output a rectangular wave alternating-current voltage as an alternating-current voltage; instead, not a voltage but a current may be controlled.

A rectangular wave output from the node T is input to the transmitting-side magnetic resonance antenna unit 120 via an electric power transmission line CA. The transmitting-side magnetic resonance antenna unit 120 includes a coil 121 (first inductor) having an inductive reactance and a capacitor 122 (capacitance: C0) (first capacitor) having a capacitive reactance. The transmitting-side magnetic resonance antenna unit 120 resonates with the opposed in-vehicle receiving-side magnetic resonance antenna unit 220 to make it possible to transmit electric energy, output from the transmitting-side magnetic resonance antenna unit 120, to the receiving-side magnetic resonance antenna unit 220.

A resonance frequency detecting unit 140 is able to detect a frequency, at which the efficiency of transmitted electric power is the highest, and transmit the detected resonance frequency data to the transmitting-side main control unit 100. The electric power transmission efficiency may be, for example, determined in such a manner that a voltage standing wave ratio (VSWR) meter, or the like, is used to make a search for a frequency at which a reflected electric power is minimized.

In addition, an electric power detecting unit 130 multiplies a detected value from a voltage detecting unit (not shown) by a detected value from a current detecting unit (not shown) to make it possible to detect an electric power value applied to the transmitting-side magnetic resonance antenna unit 120.

In addition, a communication unit 150 is able to wirelessly communicate with a vehicle-side communication unit 228 to exchange data with the vehicle.

Next, the receiving-side system provided for the vehicle will be described. In the receiving-side system, the receiving-side magnetic resonance antenna unit 220 resonates with the transmitting-side magnetic resonance antenna unit 120 to receive electric energy output from the transmitting-side magnetic resonance antenna unit 120. The receiving-side magnetic resonance antenna unit 220, as well as the transmitting-side magnetic resonance antenna unit 120, is also formed of a coil 221 (second inductor) having an inductive reactance component and a capacitor 222 (capacitance: C0) (second capacitor) having a capacitive reactance component.

A rectangular wave alternating-current electric power received by the receiving-side magnetic resonance antenna unit 220 is rectified by a rectifier 223, and the rectified electric power is stored in a storage battery 225 via a charging control unit 224. The charging control unit 224 executes control over an electric power to be stored in the storage battery 225 according to commands received from the transmitting-side main control unit 100.

In the system shown in FIG. 1, the first inductor (coil 121) of the transmitting-side magnetic resonance antenna unit 120 and the second inductor (coil 221) of the receiving-side magnetic resonance antenna unit 220 have the same inductive component, and the first capacitor (capacitor 122) of the transmitting-side magnetic resonance antenna unit 120 and the second capacitor (capacitor 222) of the receiving-side magnetic resonance antenna unit 220 have the same capacitive component.

with the above system, the transmitting-side magnetic resonance antenna unit 120 oscillates by the resonance between the first inductor (coil 121) and the first capacitor (capacitor 122), and the receiving-side magnetic resonance antenna unit 220 receives electric energy from the transmitting-side magnetic resonance antenna unit 120 by the resonance between the second inductor (coil 221) and the second capacitor (capacitor 222).

In the receiving-side system, a receiving-side main control unit 200 is a general information processing unit that includes a CPU, a ROM, a RAM, and the like. The ROM holds programs that run on the CPU. The RAM provides a work area of the CPU. The receiving-side main control unit 200 operates in cooperation with various units (shown in the drawing) connected to the receiving-side main control unit 200.

For example, data about the state of charge of the storage battery 225, data about the temperature of the storage battery 225, and the like, are input from the storage battery 225 to the receiving-side main control unit 200, and the receiving-side main control unit 200 is able to manage the storage battery 225 so as to safely and efficiently operate the storage battery 225. In addition, the receiving-side main control unit 200 outputs a command to stop charging or discharging the storage battery 225 to the storage battery 225 under abnormal conditions, or the like.

An interface unit 226 is provided near a driver's seat of the vehicle. The interface unit 226 provides predetermined information, or the like, to a user (driver) or accepts an operation or input from the user. The interface unit 226 includes a display device, buttons, a touch panel, a speaker, and the like. As a predetermined operation is conducted by the user, operation data corresponding to the predetermined operation is transmitted from the interface unit 226 to the receiving-side main control unit 200 and is processed. In addition, when predetermined information is provided to the user, display instruction data is transmitted from the receiving-side main control unit 200 to the interface unit 226.

A surrounding monitoring unit 227 is used to monitor a space G between the transmitting-side main control unit 100 and the receiving-side main control unit 200. The space G is used by the electric power transmission system according to the embodiment of the invention to transmit electric power, so it is necessary to verify the absence of a small animal, such as a cat, in the space G. The surrounding monitoring unit 227 is used for such a purpose, so an image capturing device, an infrared ray sensor, or the like, may be used as the surrounding monitoring unit 227. Data monitored by the surrounding monitoring unit 227 is input to the receiving-side main control unit 200 and is processed. When any object is found in the space G by the surrounding monitoring unit 227, it is possible to stop electric power transmission or not to start electric power transmission.

The communication unit 228 is able to wirelessly communicate with a charging facility-side communication unit 150 to exchange data with the charging facility.

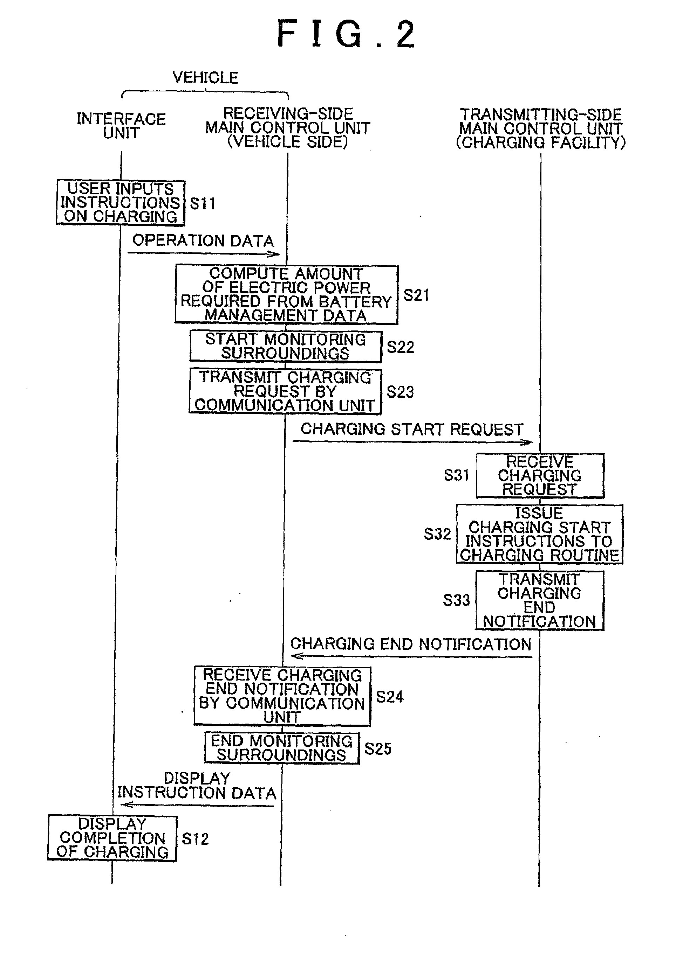

Next, the sequence at the time when electric power transmission is performed by the electric power transmission system applied to the thus configured vehicle charging facility will be described. FIG. 2 is a diagram that shows an example of a typical control sequence in the vehicle that is the power receiving side and in the charging facility that is the power transmitting side.

In step S11, as the user operates the vehicle interface unit 226 to charge the storage battery 225, the operation data is transmitted to the receiving-side main control unit 200.

As the receiving-side main control unit 200 receives the operation data, the receiving-side main control unit 200 computes the amount of electric power required of the charging facility from management data of the storage battery 225 in step S21. An existing known appropriate method may be used in such computation where appropriate.

Subsequently, in step S22, monitoring the space G using the surrounding monitoring unit 227 is started. In addition, in step S23, data for requesting the start of charging is transmitted through the communication unit 228 to the charging facility. At this time, data, such as the amount of electric power required, may be transmitted.

In the charging facility, in step S31, as the charging start request is received through the communication unit 150, charging start instructions are issued to a charging routine in step S32. The charging routine will be described in detail later. As the above charging routine ends and charging is complete, a charging end notification is transmitted to the vehicle through the communication unit 150 in step S33.

In step S24, as the communication unit 228 receives the charging end notification, monitoring using the surrounding monitoring unit 227 is ended in step S25, and display instruction data for displaying the end of charging is transmitted to the interface unit 226. As the interface unit 226 receives the display instruction data, the interface unit 226 displays the completion of charging on the display device, or the like, to notify the user.

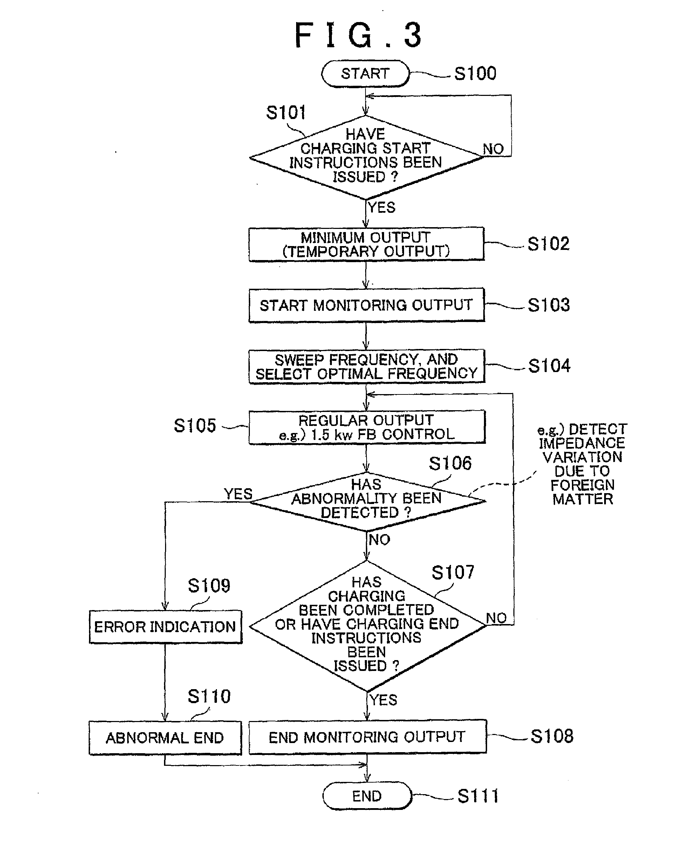

Next, the charging routine will be described. FIG. 3 is a diagram that shows the flowchart of charging routine in the charging facility that is the transmitting-side system. As the charging start instructions are issued, the charging routine exits the loop in step S101 and proceeds to step S102.

In step S102, the constant-voltage source and the switching element control unit 110 are controlled so that the output from the transmitting-side magnetic resonance antenna unit 120 becomes minimal. In step S102, temporary output is performed.

Subsequently, in step S103, the electric power detecting unit 130 is used to start monitoring the output from the transmitting-side magnetic resonance antenna unit 120. In step S104, the switching element control unit 110 is controlled to sweep the frequency of the output rectangular wave by the transition width of a predetermined frequency, and the resonance frequency detecting unit 140 is used to select a frequency optimal for transmitting and receiving electric power.

In the next step S105, electric power is transmitted using a rated output from the transmitting-side magnetic resonance antenna unit 120. At this time, feedback control that refers to a value from the electric power detecting unit 130 is executed to output electric power of about 1.5 kw.

In step S106, it is determined whether an abnormality has been detected. Such detection of an abnormality may be, for example, the detection of a steep impedance variation due to the entrance of foreign matter based on information from the electric power detecting unit 130.

In step S106, when no abnormality has been detected, negative determination is made, and the process proceeds to step S107, and then it is determined whether charging has been completed or whether instructions for ending charging have been issued from the vehicle, or the like. When negative determination is made in step S107, the process returns to step S105 and then loops.

On the other hand, when an abnormality has been detected in step S106, the process proceeds to step S109 and displays an error indication on the interface unit 226, or the like. Then, abnormal end process is executed in step S110. In step S111, the whole process ends.

In addition, when it is determined in step S107 that charging has been completed or instructions for ending charging have been issued from the vehicle, or the like, the process proceeds to step S108 and ends output monitoring of the electric power detecting unit 130. Then, in step S111, the whole process ends.

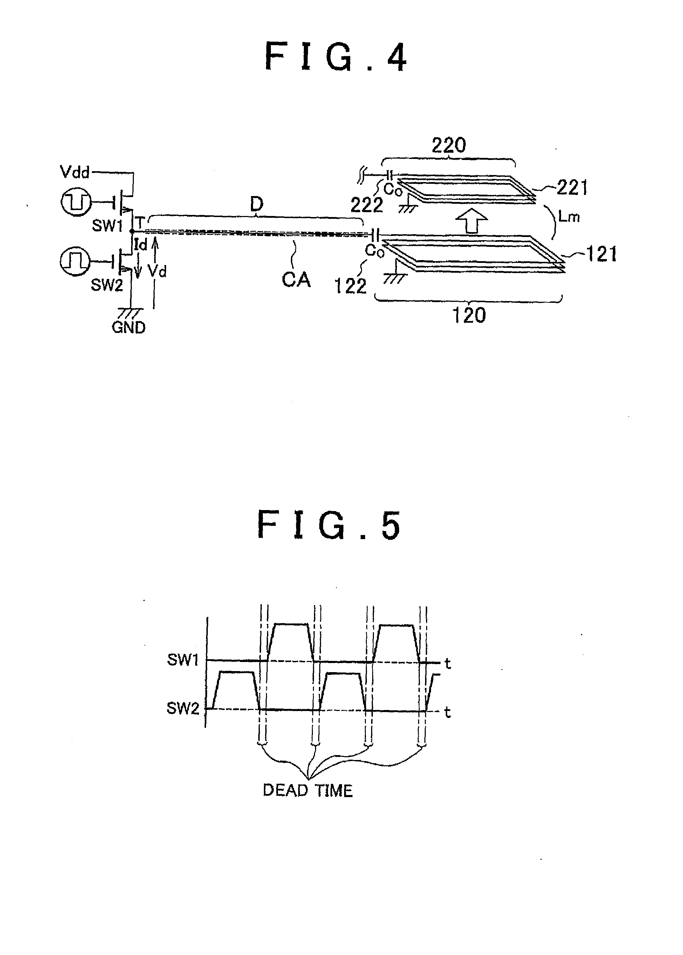

Next, a situation in which the switching elements SW1 and SW2 are driven to input a rectangular wave to the transmitting-side magnetic resonance antenna unit 120 to cause the transmitting-side magnetic resonance antenna unit 120 to resonate with the receiving-side magnetic resonance antenna unit 220 to thereby supply electric power from the transmitting-side system to the receiving-side system will be described in further detail. FIG. 4 is a diagram that illustrates an electric power transmission unit in the electric power transmission system according to the embodiment of the invention, focusing on the relevant portion of the electric power transmission unit. In addition, FIG. 5 is a timing chart of on-off control over the switching elements in the electric power transmission system according to the embodiment of the invention.

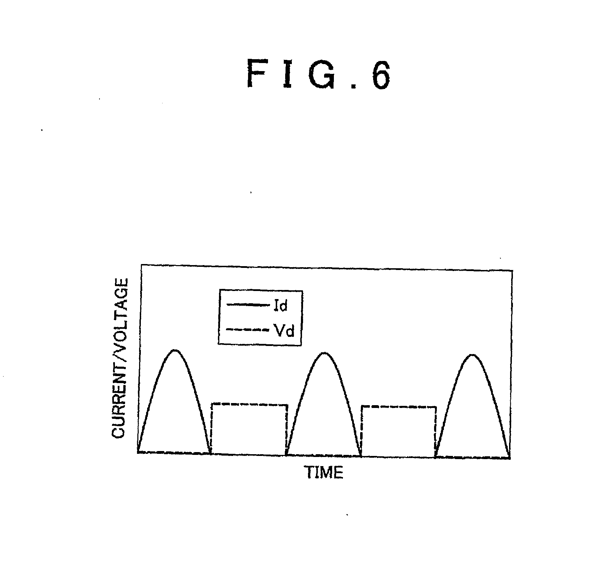

The constant voltage source is connected to the drain of the switching element SW2, and the constant voltage Vdd is applied to the drain of the switching element SW2. When on-off control shown in FIG 5 is repeatedly executed over the switching element SW1 and the switching element SW2, a voltage Vd at the node T is as shown in FIG. 6. FIG. 6 is a graph that shows the correlation between a voltage and a current in the electric power transmission system according to the embodiment of the invention. In addition, a current. Id that flows through the switching element SW2 is also shown in FIG. 6.

As is apparent from a comparison between the voltage-current characteristic of the electric power transmission system according to the embodiment of the invention shown in FIG. 6 and the voltage-current characteristic of the existing electric power transmission system shown in FIG 20B, it appears that there is no switching loss in the former characteristic. In this way, with the electric power transmission system according to the embodiment of the invention, it is possible to reduce a switching loss, so it is possible to suppress deterioration in the electric power transmission efficiency.

When the thus generated rectangular wave voltage is input to the transmitting-side magnetic resonance antenna unit 120 via the electric power transmission line CA, the transmitting-side magnetic resonance antenna unit 120 resonates with the opposed receiving-side magnetic resonance antenna unit 220. Owing to such resonance, electric energy output from the transmitting-side magnetic resonance antenna unit 120 may be effectively transmitted to the receiving-side magnetic resonance antenna unit 220. In addition, the resonance frequency at this time may be expressed by the following mathematical expression (1) where the inductance of the transmitting-side magnetic resonance antenna unit 120 is L and the mutual inductance between the transmitting-side magnetic resonance antenna unit 120 and the receiving-side magnetic resonance antenna unit 220 is Lm.

$$ f = \frac{1}{2\pi\sqrt{(L \pm Lm)C_0}} \quad \cdots (1) $$

In the present embodiment, elements are selected so as to set the resonance frequency at about several hundreds of kHz to about several thousands of kHz, and the Q factor of the transmitting-side magnetic resonance antenna unit 120 is set so as to be equal to or larger than 300.

Here, in the on-off control over the switching element SW1 and the switching element SW2 shown in FIG. 5, in order not to break the elements because of excessive current flowing through the elements in such a manner that the switching element SW1 and switching element SW2 connected in series conduct at the same time, a certain dead time is provided as shown in FIG. 5. Note that the dead time is selected depending on the characteristics of the switching elements.

In addition, the frequency of the rectangular wave generated by the switching element SW1 and the switching element SW2 that are driven according to signals shown in FIG. 5 ranges from about several hundreds of kHz to about several thousands of kHz. In addition, in the present embodiment, a capacitor $C_o$ is included in the transmitting-side magnetic resonance antenna unit 120 together with the coil 121 to thereby make it possible to effectively input electric power to the transmitting-side magnetic resonance antenna unit 120 without providing a unit, such as an impedance matching box, at the T side even when the distance D of the electric power transmission line CA is elongated to a certain degree.

Next, a first alternative embodiment of the invention will be described. In the former embodiment, a half-bridge inverter circuit that uses two switching elements is used to generate a rectangular wave; whereas, in the first alternative embodiment, a full-bridge inverter circuit that uses four switching elements is used to generate a rectangular wave.

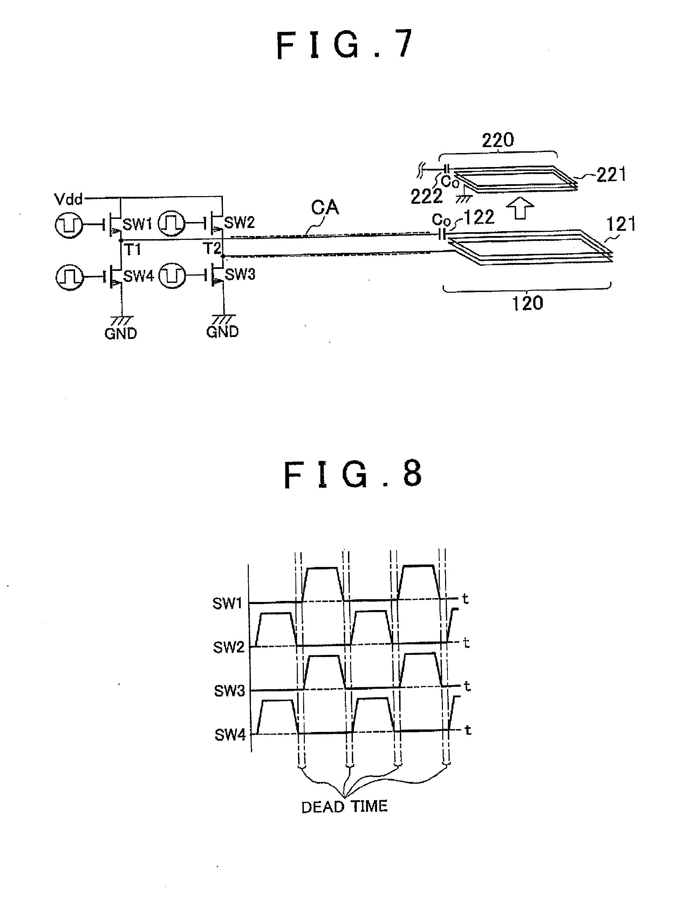

FIG. 7 is a diagram that illustrates an electric power transmission unit in an electric power transmission system according to the first alternative embodiment of the invention. FIG. 8 is a timing chart of on-off control over switching elements in the electric power transmission system according to the first alternative embodiment of the invention.

In the present embodiment, a node T1 between a switching element SW1 and switching element SW4 connected in series and a node T2 between a switching element SW2 and switching element SW3 connected in series are connected to a transmitting-side magnetic resonance antenna unit 120 via an electric power transmission line CA. As shown in FIG. 8, when the switching element SW1 and the switching element SW4 are on, the switching element SW2 and the switching element SW3 are off; whereas, when the switching element SW1 and the switching element SW4 are off, the switching element SW2 and the switching element SW3 are on. By so doing, a rectangular wave alternating-current voltage is generated between the node T1 and the node T2.

With the thus configured electric power transmission system that uses the electric power transmission system according to the first alternative embodiment as well, similar advantageous effects to those of the above described embodiment are obtained. Furthermore, when electric power is supplied to the transmitting-side magnetic resonance antenna unit 120 by the full-bridge inverter circuit as described in the first alternative embodiment, an electric power higher than that of the half-bridge inverter circuit may be supplied if a supplied voltage (Vdd) is the same. Note that both the half-bridge inverter circuit and the full-bridge inverter circuit are desirably operated using voltage mode control.

Next, a second alternative embodiment of the invention will be described. In the embodiments described above, in order to eliminate the necessity of adjusting the impedance at the node T side, the capacitor $C_o$ is included in the transmitting-side magnetic resonance antenna unit 120 together with the coil 121; however, the aspect of the invention is not limited to this configuration. Instead, the transmitting-side magnetic resonance antenna unit 120 may be formed of only the coil 121. In this case, the impedance is somewhat adjusted at the node T side, and a rectangular wave voltage output from the inverter circuit is input to the transmitting-side magnetic resonance antenna unit 120 via the electric power transmission line CA.

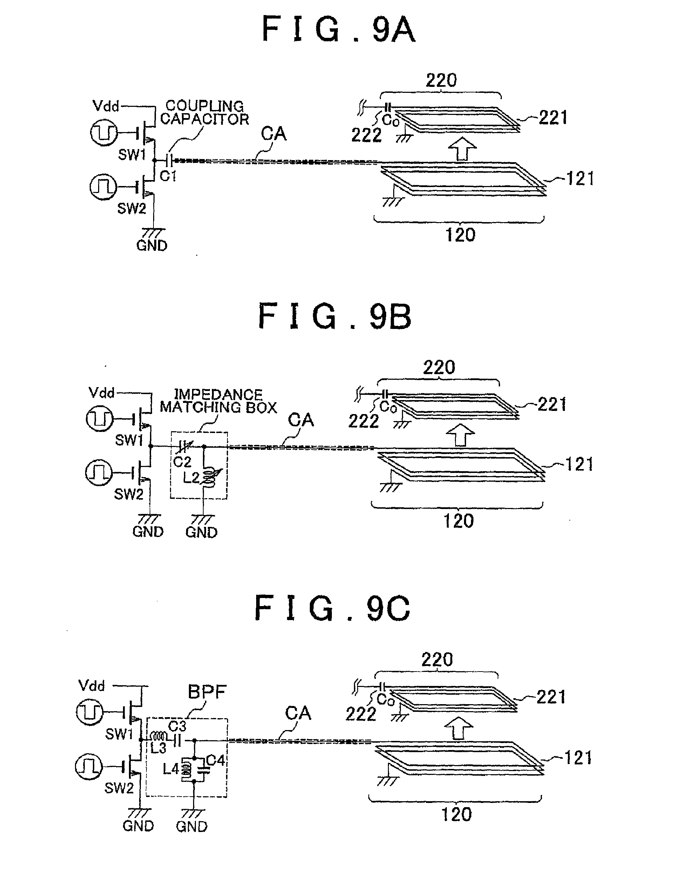

FIG. 9A to FIG. 9C focus on a relevant portion of an electric power transmission unit in an electric power transmission system according to the second alternative embodiment of the invention, and are diagrams that illustrate the circuit configurations when no capacitor is provided for the transmitting-side magnetic resonance antenna unit 120.

FIG. 9A shows an example in which the impedance of the input to the transmitting-side magnetic resonance antenna unit 120 is adjusted by providing a coupling capacitor having a capacitance C1 at the node T side.

In addition, FIG. 9B shows an example in which an impedance matching box that uses a variable capacitor C2 and a variable inductor L2 is provided at the node T side to adjust the impedance of the input to the transmitting-side magnetic resonance antenna unit 120.

In addition, FIG. 9C shows an example in which an impedance matching box that uses a band-pass filter formed of a coil L3 and capacitor C3 connected in series and a coil L4 and capacitor C4 connected in parallel is provided at the node T side to adjust the impedance of the input to the transmitting-side magnetic resonance antenna unit 120.

With the thus configured electric power transmission system that uses the electric power transmission system according to the second alternative embodiment as well, similar advantageous effects to those of the above described embodiments are obtained.

Next, a third alternative embodiment of the invention will be described. As described above, in the electric power transmission system according to the embodiment of the invention, in order to set the electric power transmission efficiency at or above a certain level, the Q factor of the transmitting-side magnetic resonance antenna unit 120 is set so as to be larger than or equal to 100. In addition, the frequency of the rectangular wave voltage used is assumed to range from about several hundreds of kHz to about several thousands of kHz.

In addition, when taking into consideration that the electric power transmission system according to the embodiment of the invention is applied to the vehicle charging facility (transmitting-side system) and the vehicle (receiving-side system) shown in FIG. 1, there is a limit to increasing the inductance of the transmitting-side magnetic resonance antenna unit 120. In addition, similarly, the capacitance of the capacitor $C_o$ also needs to have a certain limit. Thus, the Q factor obtained by the following mathematical expression (2) is calculated while changing the inductance L, the capacitance C and the resistance R.

$$Q = \frac{1}{R}\sqrt{\frac{L}{C}} \quad \cdots (2)$$

Hereinafter, three frequencies, that is, f = 300 [kHz], f = 400 [kHz] and f = 500 [kHz], are used in calculation as frequencies that can be used in the electric power transmission system according to the embodiment of the invention. Table 1 shows Q factors with combinations of the inductance L, the capacitance C and the resistance R for f = 300 [kHz]. Table 2 shows Q factors with combinations of the inductance L, the capacitance C and the resistance R for f = 400 [kHz]. Table 3 shows Q factors with combinations of the inductance L, the capacitance C and the resistance R for f = 500 [kHz].

In Table 1 to Table 3, the combinations of the inductance L, the capacitance C and the resistance R in the portions surrounded by the dotted line are applicable for the magnetic resonance antenna unit used in the electric power transmission system for the vehicle charging facility.

The portions surrounded by the dotted line satisfy the following conditions.

- The Q factor is larger than or equal to 100.
- The inductance is larger than or equal to 50µH and smaller than or equal to 500 µH.
- The capacitance of the capacitor $C_O$ is larger than or equal to 200 pF and smaller than or equal to 3000 pF.

In this way, in the electric power transmission system according to the third alternative embodiment of the invention, the inductance of each of the transmitting-side magnetic resonance antenna unit 120 and the receiving-side magnetic resonance antenna unit 220 is larger than or equal to 50 µH and smaller than or equal to 500 µH, and the capacitance of the capacitor $C_O$ is larger than or equal to 200 pF and smaller than or equal to 3000 pF, so an appropriate electric power transmission system for a vehicle charging facility may be constructed.

[Table 1]

| L[µH] | f=300[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 10 | 28144.77 | 37.69911 | 28144.77 | 18.84956 | 28144.77 | 12.56637 | 28144.77 | 9.424778 |
| 20 | 14072.39 | 75.39822 | 14072.39 | 37.69911 | 14072.39 | 25.13274 | 14072.39 | 18.84956 |
| 30 | 9381.581 | 113.0973 | 9381.591 | 56.54867 | 9381.591 | 37.69911 | 9381.591 | 28.27433 |
| 40 | 7036.193 | 150.7964 | 7036.193 | 75.39822 | 7036.193 | 50.26548 | 7036.193 | 37.69911 |
| 50 | 5628.955 | 188.4956 | 5628.955 | 94.24778 | 5628.955 | 62.83185 | 5628.955 | 47.12389 |
| 60 | 4690.796 | 226.1947 | 4690.796 | 113.0973 | 4690.796 | 75.39822 | 4690.796 | 56.54867 |
| 70 | 4020.682 | 263.8938 | 4020.682 | 131.9469 | 4020.682 | 87.96459 | 4020.682 | 65.97345 |
| 80 | 3518.097 | 301.5929 | 3518.097 | 150.7964 | 3518.097 | 100.531 | 3518.097 | 75.39822 |
| 90 | 3127.197 | 339.292 | 3127.197 | 169.646 | 3127.197 | 113.0973 | 3127.197 | 84.823 |
| 100 | 2814.477 | 376.8911 | 2814.477 | 188.4956 | 2814.477 | 125.6637 | 2814.477 | 94.24778 |
| 110 | 2558.616 | 414.6902 | 2558.616 | 207.3451 | 2558.616 | 138.2301 | 2558.616 | 103.6726 |
| 120 | 2345.398 | 452.3893 | 2345.398 | 228.1947 | 2345.398 | 150.7964 | 2345.398 | 113.0973 |
| 130 | 2164.983 | 490.0885 | 2164.983 | 245.0442 | 2164.983 | 163.3628 | 2164.983 | 122.5221 |
| 140 | 2010.341 | 527.7876 | 2010.341 | 263.8938 | 2010.341 | 175.9292 | 2010.341 | 131.9469 |
| 150 | 1876.318 | 565.4867 | 1876.318 | 282.7433 | 1876.318 | 188.4956 | 1876.318 | 141.3717 |
| 160 | 1759.048 | 603.1858 | 1759.048 | 301.5929 | 1759.048 | 201.0619 | 1759.048 | 150.7964 |
| 170 | 1655.575 | 640.8849 | 1655.575 | 320.4425 | 1655.575 | 213.6283 | 1655.575 | 160.2212 |

(continued)

| L[μH] | f=300[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 180 | 1.583.599 | 678.584 | 1563.599 | 339.292 | 1563.599 | 226.1947 | 1563.599 | 169.646 |
| 190 | 1481.304 | 716.2831 | 1481.304 | 358.1416 | 1481.304 | 238.761 | 1481.304 | 179.0708 |
| 200 | 1407.239 | 753.9822 | 1407.239 | 376.9911 | 1407.239 | 251.3274 | 1407.239 | 188.4956 |
| 210 | 1340.227 | 791.6813 | 1340.227 | 395.8407 | 1340.227 | 263.8938 | 1340.227 | 197.9203 |
| 220 | 1279.308 | 829.3805 | 1278.308 | 414.6902 | 1279.308 | 276.4602 | 1279.308 | 207.3451 |
| 230 | 1223.686 | 867.0796 | 1223.686 | 433.5398 | 1223.686 | 289.0265 | 1223.686 | 216.7699 |
| 240 | 1172.699 | 904.7787 | 1172.699 | 452.3893 | 1172.699 | 301.5929 | 1172.699 | 226.1947 |
| 250 | 1125.791 | 942.4778 | 1125.791 | 471.2389 | 1125.791 | 314.1593 | 1125.791 | 235.6194 |
| 260 | 1082.491 | 980.1769 | 1082.491 | 490.0685 | 1082.491 | 326.7256 | 1082.491 | 245.0442 |
| 270 | 1042.399 | 1017.876 | 1042.399 | 508.938 | 1042.399 | 339.292 | 1042.399 | 254.469 |
| 280 | 1005.17 | 1055.575 | 1005.17 | 527.7876 | 1005.17 | 351.8584 | 1005.17 | 263.6938 |
| 290 | 970.5094 | 1093.274 | 970.5094 | 546.6371 | 970.5094 | 364.4247 | 970.5094 | 273.3186 |
| 300 | 938.1591 | 1130.973 | 938.1591 | 565.4867 | 938.1591 | 376.9911 | 938.1591 | 282.7433 |
| 310 | 907.8959 | 1168.672 | 907.8959 | 584.3362 | 907.8959 | 389.5575 | 907.8959 | 292.1681 |
| 320 | 879.5242 | 1208.372 | 879.5242 | 603.1858 | 879.5242 | 402.1239 | 879.5242 | 301.5929 |
| 330 | 852.8719 | 1244.071 | 852.8719 | 622.0353 | 852.8719 | 414.6902 | 852.8719 | 311.0177 |
| 340 | 827.7874 | 1281.77 | 827.7874 | 640.8849 | 827.7874 | 427.2566 | 827.7874 | 320.4425 |
| 350 | 804:1364 | 1319.469 | 804.1364 | 659.7345 | 804.1364 | 439.823 | 804.1364 | 329.8672 |
| 360 | 781.7993 | 1357.168 | 781.7993 | 678.584 | 781.7993 | 452.3893 | 781.7993 | 339.292 |
| 370 | 760.6695 | 1394.867 | 760.6695 | 697.4336 | 760.6695 | 464.9557 | 780.6695 | 346.7168 |
| 380 | 740.6519 | 1432.566 | 740.6519 | 716.2831 | 740.6519 | 477.5221 | 740.6519 | 358.1416 |
| 390 | 721.6609 | 1470.266 | 721.6609 | 735.1327 | 721.6609 | 400.0885 | 721.6609 | 367.5663 |
| 400 | 703.6193 | 1507.964 | 703.6193 | 753.9822 | 703.6193 | 502.6548 | 703.6193 | 376.9911 |
| 410 | 686.4579 | 1546.664 | 686.4578 | 772.8318 | 686.4579 | 515.2212 | 686.4579 | 386.4159 |
| 420 | 670.1136 | 1583.363 | 670.1136 | 791.6813 | 670.1136 | 527.7876 | 670.1136 | 395.8407 |
| 430 | 654.5296 | 1621.062 | 654.5296 | 810.5309 | 654.5298 | 540.3539 | 654.5296 | 405.2655 |
| 440 | 639.6539 | 1658.761 | 639.6539 | 829.3805 | 639.6539 | 552.9203 | 639.6539 | 414.6902 |
| 450 | 625.4394 | 1696.46 | 625.4394 | 848.23 | 625.4394 | 565.4867 | 625.4394 | 424.115 |
| 460 | 611.8429 | 1734.159 | 611.8429 | 867.0796 | 611.8429 | 578.053 | 611.8429 | 433.5398 |
| 470 | 598.825 | 1771.858 | 598.825 | 885.9291 | 598.825 | 590.6194 | 598.825 | 442.6946 |
| 480 | 586.3494 | 1809.557 | 588.3494 | 904.7787 | 586.3494 | 603.1858 | 586.3494 | 452.3893 |
| 490 | 574.3831 | 1847.256 | 574.3831 | 923.6282 | 874.3831 | 615.7522 | 574.3831 | 461.8141 |
| 500 | 562.8955 | 1884.956 | 562.8955 | 942.4778 | 562.8955 | 628.3185 | 562.8955 | 471.2389 |
| 510 | 551.8583 | 1922.655 | 551.8583 | 961.3274 | 551.8583 | 640.8849 | 551.8583 | 480.6637 |
| 520 | 541.2456 | 1960.354 | 541.2456 | 980.1769 | 541.2456 | 653.4513 | 641.2456 | 490.0885 |
| 530 | 531.0335 | 1988.053 | 631.0335 | 999.0265 | 531.0335 | 666.0176 | 531.0335 | 499.5132 |

(continued)

| L[μH] | f=300[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 540 | 521.1995 | 2035.752 | 521.1995 | 1017.676 | 521.1995 | 676.584 | 521.1895 | 508.938 |
| 550 | 511.7231 | 2073.451 | 511.7231 | 1036.726 | 511.7231 | 691.1504 | 511.7231 | 518.3628 |
| 560 | 602.5852 | 2111.15 | 502.5852 | 1055.575 | 502.5852 | 703.7168 | 502.5852 | 527.7876 |
| 570 | 493.768 | 2148.849 | 493.768 | 1094.425 | 493.768 | 716.2831 | 493.768 | 537.2123 |
| 580 | 485.2547 | 2186.548 | 485.2547 | 1093.274 | 485.2547 | 728.8495 | 485.2547 | 546.6371 |
| 590 | 477.0301 | 2224.248 | 477.0301 | 1112.124 | 477.0301 | 741.4159 | 477.0301 | 556.0619 |
| 600 | 469.0796 | 2261.947 | 469.0796 | 1130.973 | 469.0796 | 753.9822 | 469.0796 | 565.4867 |
| 610 | 461.3897 | 2299.646 | 461.3897 | 1.149.823 | 461.3897 | 766.5486 | 461.3897 | 574.9115 |
| 620 | 453.948 | 2337.345 | 453.948 | 1168.872 | 453.948 | 779.115 | 453.948 | 584.3362 |
| 630 | 446.7424 | 2375.044 | 446.7424 | 1187.522 | 448.7424 | 791.6813 | 446.7424 | 693.761 |
| 640 | 439.7621 | 2412.743 | 439.7621 | 1206.372 | 438.7621 | 804.2477 | 439.7621 | 603.1858 |
| 650 | 432.9965 | 2450.442 | 432.9965 | 1225.221 | 432.9965 | 816.8141 | 432.9966 | 612.6106 |
| 660 | 428.436 | 2488.141 | 426.436 | 1244.071 | 426.436 | 829.3805 | 426.436 | 622.0353 |
| 670 | 420.0712 | 2525.84 | 420.0712 | 1262.92 | 420.0712 | 841.9468 | 420.0712 | 631.4601 |
| 680 | 413.8937 | 2563.54 | 413.8937 | 1281.77 | 413.8937 | 854.5132 | 413.8937 | 640.8949 |
| 690 | 401.8953 | 2601.239 | 407.8953 | 1300.619 | 407.8953 | 867.0796 | 407.8953 | 650.3097 |
| 700 | 402.0682 | 2638.938 | 402.0682 | 1319.469 | 402.0682 | 879.6459 | 402.0682 | 659.7345 |

[Table 2]

| L[μH] | f=400[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 10 | 15831.43 | 50.26548 | 15831.43 | 25.13274 | 15831.43 | 16.75516 | 15831.43 | 12.56637 |
| 20 | 7915.717 | 100.531 | 7915.717 | 50.26548 | 7915.717 | 33.51032 | 7915.717 | 25.13274 |
| 30 | 5277.145 | 150.7964 | 5277.145 | 75.39822 | 5277.145 | 50.25548 | 5277.145 | 37.69911 |
| 40 | 3957.859 | 201.0619 | 3957.859 | 100.531 | 3957.859 | 67.02064 | 3957.859 | 50.26548 |
| 50 | 3166.287 | 251.3274 | 3166.287 | 125.6637 | 3166.287 | 83.7758 | 3166.287 | 62.83185 |
| 60 | 2638.572 | 301.5929 | 2638.572 | 150.7984 | 2638.572 | 100.531 | 2638.572 | 75.39822 |
| 70 | 2261.634 | 351.8584 | 2261.634 | 175.9292 | 2261.634 | 117.2861 | 2261.634 | 87.96459 |
| 80 | 1978.929 | 402.1239 | 1978.929 | 201.0819 | 1978.929 | 134.0413 | 1978.929 | 100.531 |
| 90 | 1759.048 | 452.3893 | 1759.048 | 226.1947 | 1759.048 | 150.7964 | 1759.048 | 113.0973 |
| 100 | 1583.143 | 502.6548 | 1583.143 | 251.3274 | 1583.143 | 167.5516 | 1583.143 | 125.6637 |
| 110 | 1439.221 | 552.9203 | 1439.221 | 276.4602 | 1439.221 | 184.3068 | 1439.221 | 138.2301 |
| 120 | 1319.286 | 803.1858 | 1319.286 | 301.5929 | 1319.286 | 201.0619 | 1319.286 | 150.7964 |
| 130 | 1217.803 | 653.4513 | 1217.803 | 326.7256 | 1217.803 | 217.8171 | 1217.803 | 163.3628 |
| 140 | 1130.817 | 700.7168 | 1130.817 | 351.8584 | 1130.817 | 234.5723 | 1130.817 | 175.9292 |

(continued)

| L[μH] | R=0.5[Ω] | | R=1[Ω] | | R=1.5[Ω] | | R=2[Ω] | |
|---|---|---|---|---|---|---|---|---|
| | C[pF] | Q | C[pF] | Q | C[pF] | Q | C | Q |
| 150 | 1055.429 | 753.9822 | 1055.429 | 376.9911 | 1055.429 | 251.2374 | 1055.429 | 188.4956 |
| 160 | 989.4647 | 804.2477 | 989.4647 | 402.1239 | 989.4647 | 268.0826 | 989.4647 | 201.0619 |
| 170 | 931.2609 | 854.5132 | 931.2609 | 427.2566 | 931.2809 | 284.8377 | 931.2609 | 213.6283 |
| 180 | 879.5242 | 904.7787 | 879.5242 | 452.3893 | 879.5242 | 301.5929 | 879.5242 | 228.1947 |
| 190 | 833.2334 | 955.0442 | 833.2334 | 477.5221 | 833.2334 | 318.3481 | 833.2334 | 238.761 |
| 200 | 791.5717 | 1005.31 | 791.5717 | 502.6548 | 791.5717 | 335.1032 | 791.5717 | 251.3274 |
| 210 | 753.8779 | 1055.575 | 753.8779 | 527.7876 | 753.8779 | 351.8584 | 753.8779 | 263.8938 |
| 220 | 719.8107 | 1105.841 | 719.6107 | 552.9203 | 719.6107 | 368.6135 | 719.6107 | 276.4602 |
| 230 | 688.3233 | 1756.106 | 688.3233 | 578.053 | 688.3233 | 385.3687 | 688.3233 | 289.0285 |
| 240 | 659.6431 | 1208.372 | 859.6431 | 603.1858 | 659.6431 | 402.1239 | 650.6431 | 301.5929 |
| 250 | 633.2574 | 1256.637 | 633.2574 | 628.3185 | 633.2574 | 418.879 | 633.2574 | 314.1593 |
| 260 | 608.9013 | 1308.903 | 608.9013 | 653.4513 | 808.9013 | 436.6342 | 808.9013 | 326.7258 |
| 270 | 586.3494 | 1357.168 | 586.3494 | 878.584 | 586.3494 | 452.3893 | 586.3494 | 339.292 |
| 280 | 565.4084 | 1407.434 | 565.4084 | 703.7188 | 565.4084 | 469.1445 | 565.4084 | 351.8584 |
| 290 | 545.9115 | 1457.899 | 545.9115 | 728.8495 | 545.9115 | 485.6997 | 545.9115 | 384.4247 |
| 300 | 527.7145 | 1507.964 | 627.7145 | 753.9822 | 527.7145 | 502.6548 | 527.7145 | 376.9911 |
| 310 | 510.6914 | 1558.23 | 510.6914 | 779.115 | 510.6914 | 519.41 | 510.6914 | 389.5575 |
| 320 | 494.7323 | 1608.495 | 494.7323 | 804.2477 | 494.7323 | 538.1851 | 494.7323 | 402.1239 |
| 330 | 479.7405 | 1658.761 | 479.7405 | 829.3805 | 479.7405 | 552.9203 | 479.7405 | 414.6902 |
| 340 | 485.8304 | 1709.026 | 465.8304 | 854.5132 | 466.6304 | 569.6755 | 465.6304 | 427.2566 |
| 350 | 452.3267 | 1759.292 | 452.3267 | 879.8459 | 452-3267 | 586.4308 | 452.3267 | 439.823 |
| 360 | 439.7621 | 1808.557 | 439.7621 | 904.7787 | 439.7621 | 603.1858 | 439.7621 | 452.3893 |
| 370 | 427.8766 | 1859.823 | 427.8766 | 929.9114 | 427.8766 | 619941 | 427.8766 | 464.9557 |
| 380 | 416.6167 | 1910.088 | 416.6167 | 955.0442 | 416.6167 | 638.6961 | 416.6167 | 477.5221 |
| 390 | 405.9342 | 1960.354 | 405.9342 | 980.1769 | 405.9342 | 653.4513 | 405.9342 | 490.0885 |
| 400 | 395.7859 | 2010.618 | 395.7859 | 1005.31 | 395.7859 | 670.2084 | 395.7859 | 502.6548 |
| 410 | 386.1326 | 2080.885 | 386.1326 | 1030.442 | 388.1326 | 686.9616 | 386.1326 | 515.2212 |
| 420 | 376.9389 | 2111.15 | 376.9389 | 1055.575 | 376.9389 | 703.7188 | 376.9389 | 527.7876 |
| 430 | 368.1729 | 2181.418 | 368.1729 | 1080.708 | 368.1729 | 720.4719 | 388.1729 | 540.3539 |
| 440 | 359.8053 | 2211.681 | 359.8053 | 1105.841 | 359.8053 | 737.2271 | 359.8053 | 552.9203 |
| 450 | 351.8097 | 2291.947 | 351.8097 | 1130.973 | 351.8097 | 753.9822 | 351.8097 | 565.4867 |
| 480 | 344.1616 | 2312.212 | 344.1616 | 1156.106 | 344.1616 | 770.7374 | 344.1616 | 578.053 |
| 470 | 336.839 | 2362.478 | 336.838 | 1181.239 | 338.839 | 787.4926 | 338.839 | 590.6194 |
| 480 | 329.8216 | 2412.743 | 329.8216 | 1206.372 | 329.8216 | 804.2477 | 329.8216 | 603.1858 |
| 490 | 323.0905 | 2463.009 | 323.0905 | 1231.504 | 323.0905 | 821.0029 | 323.0905 | 615.7522 |
| 500 | 316.6287 | 2513.274 | 316.6287 | 1256.637 | 316.6287 | 837.758 | 316.6287 | 628.3185 |

(continued)

| L[μH] | f=400[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 510 | 310.4203 | 2563.54 | 310.4203 | 1281.77 | 310.4203 | 854.5132 | 310.4203 | 640.8849 |
| 520 | 304.4507 | 2613.805 | 304.4507 | 1306.903 | 304.4507 | 871.2684 | 304.4507 | 653.4513 |
| 530 | 298.7063 | 2664.071 | 298.7063 | 1332.035 | 298.7063 | 888.0235 | 298.7083 | 666.0176 |
| 540 | 293.1747 | 2714.336 | 293.1747 | 1357.168 | 293.1747 | 904.7787 | 293.1747 | 678.584 |
| 550 | 287.8443 | 2764.602 | 287.8443 | 1382.301 | 287.8443 | 921.5338 | 287.8443 | 691.1504 |
| 560 | 282.7042 | 2814.887 | 282.7042 | 1407.434 | 282.7042 | 938.289 | 282.7042 | 703.7168 |
| 570 | 277.7445 | 2865.133 | 277.7445 | 1432.568 | 277.7445 | 965.0442 | 277.7445 | 716.2831 |
| 580 | 272.9558 | 2915.398 | 272.9558 | 1457.699 | 272.9558 | 971.7993 | 272.9558 | 728.8495 |
| 590 | 268.3294 | 2965.663 | 268.3294 | 1482.832 | 268.3294 | 988.5545 | 288.3294 | 741.4159 |
| 600 | 263.8572 | 3015.929 | 263.8572 | 1507.964 | 263.8572 | 1005.31 | 263.8572 | 753.9822 |
| 610 | 259.5317 | 3066.194 | 259.5317 | 1533.097 | 259.5317 | 1022.085 | 259.5317 | 766.5486 |
| 620 | 255.3457 | 3118.48 | 255.3457 | 1558.23 | 255.3457 | 1038.82 | 255.3457 | 779.115 |
| 630 | 251.2926 | 3166.725 | 251.2926 | 1583.363 | 251.2926 | 1055.575 | 251.2928 | 791.6813 |
| 640 | 247.3662 | 3218.991 | 247.3662 | 1608.495 | 247.3662 | 1072.33 | 247.3862 | 804.2477 |
| 650 | 243.5605 | 3267.256 | 243.5605 | 1633.628 | 243.5605 | 1089.085 | 243.5605 | 816.8141 |
| 660 | 239.8702 | 3337.522 | 238.8702 | 1658.781 | 239.8702 | 1105.841 | 239.8702 | 829.3805 |
| 670 | 236.2901 | 3397.787 | 236.2901 | 1883.894 | 236.2901 | 1122.596 | 236.2901 | 841.9468 |
| 680 | 232.8152 | 3418.053 | 232.8152 | 1709.028 | 232.8152 | 1139.351 | 232.8152 | 854.5132 |
| 690 | 229.4411 | 3468.318 | 229.4411 | 1734.159 | 229.4411 | 1156.106 | 229.4411 | 867.0796 |
| 700 | 226.1634 | 3518.584 | 228.1634 | 1759.292 | 226.1634 | 1172.861 | 226.1634 | 879.6459 |

[Table 3]

| L[μH] | f=500[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 10 | 10132.12 | 62.83185 | 10132.12 | 31.41593 | 10132.12 | 20.94395 | 10132.12 | 15.70796 |
| 20 | 5066.059 | 125.6637 | 5066.059 | 62.83185 | 5066.059 | 41.8879 | 5066.059 | 31.41593 |
| 30 | 3377.373 | 188.4956 | 3377.373 | 94.24778 | 3377.373 | 62.83185 | 3377.373 | 47.12389 |
| 40 | 2533.03 | 251.3274 | 2533.03 | 125.8837 | 2533.03 | 83.7758 | 2533.03 | 62.83185 |
| 50 | 2026.424 | 314.1593 | 2026.424 | 157.0796 | 2026.424 | 104.7198 | 2026.424 | 78.53982 |
| 60 | 1688.686 | 376.9911 | 1688.686 | 188.4956 | 1688.686 | 125.6637 | 1688.688 | 94.24778 |
| 70 | 1447.445 | 439.823 | 1447.445 | 219.9115 | 1447.445 | 146.6077 | 1447.445 | 109.9557 |
| 80 | 1266.515 | 502.6548 | 1266.515 | 251.3274 | 1288.515 | 167.5516 | 1266.515 | 125.6637 |
| 90 | 1125.791 | 565.4867 | 1125.791 | 282.7433 | 1125.791 | 188.4956 | 1125.791 | 141.3717 |
| 100 | 1013.212 | 628.1685 | 1013.212 | 314.1593 | 1013.212 | 209.4395 | 1013.312 | 157.0796 |
| 110 | 921.1017 | 691.1504 | 921.1017 | 345.5752 | 921.1017 | 230.3835 | 921.1017 | 172.7876 |

(continued)

| L[μH] | f=500[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 120 | 844.3432 | 753.9822 | 844.3432 | 376.9911 | 844.3432 | 251.3274 | 844.3432 | 188.4956 |
| 130 | 779.3937 | 816.8141 | 779.3937 | 408.407 | 779.3937 | 272.2714 | 779.3937 | 204.2035 |
| 140 | 723.7227 | 879.6459 | 723.7227 | 439.823 | 723.7227 | 293.2153 | 723.7227 | 219.9115 |
| 150 | 675.4746 | 942.4778 | 675.4746 | 471.2389 | 675.4746 | 314.1593 | 675.4746 | 235.6194 |
| 160 | 633.2574 | 1005.31 | 633.2574 | 502.8548 | 633.2574 | 335.1032 | 633.2574 | 261.3274 |
| 170 | 596.007 | 1068.142 | 596.007 | 634.0708 | 596.007 | 358.0472 | 596.007 | 267.0354 |
| 180 | 562.8955 | 1130.973 | 562.8955 | 585.4867 | 562.8955 | 376.9911 | 562.8955 | 282.7433 |
| 190 | 533.2694 | 1193.805 | 533.2694 | 595.9026 | 533.2694 | 397.9351 | 533.2694 | 298.4513 |
| 200 | 506.6059 | 1256.637 | 506.6059 | 828.3185 | 508.8059 | 418.879 | 508.6059 | 314.1593 |
| 210 | 482.4818 | 1319.469 | 482.4818 | 659.7345 | 482.4818 | 439.823 | 482.4818 | 329.8672 |
| 220 | 460.5508 | 1382.301 | 480.5508 | 691.1504 | 460.5508 | 460.7669 | 460.5508 | 345.5752 |
| 230 | 440.5269 | 1445.133 | 440.5269 | 722.5663 | 440.5269 | 481.7109 | 440.5269 | 361.2832 |
| 240 | 422.1716 | 1507.964 | 422.1716 | 753.9822 | 422.1716 | 502.6548 | 422.1718 | 378.9911 |
| 250 | 405.2847 | 1570.796 | 405.2847 | 785.3982 | 405.2847 | 523.5988 | 405.2847 | 392.6991 |
| 260 | 389.6969 | 1633.628 | 389.6969 | 816.8141 | 389.8969 | 544.5427 | 389.6969 | 408.407 |
| 270 | 375.2636 | 1696.46 | 375.2636 | 848.23 | 375.2636 | 565.4867 | 375.2636 | 424.115 |
| 280 | 361.8614 | 1759.292 | 381.8614 | 879.6459 | 361.8614 | 586.4306 | 361.8614 | 439.823 |
| 290 | 349.3834 | 1822.124 | 349.3834 | 911.0619 | 349.3834 | 607.3746 | 349.3834 | 455.5309 |
| 300 | 337.7373 | 1884.958 | 337.7373 | 942.4778 | 337.7373 | 628.3185 | 337.7373 | 471.2389 |
| 310 | 328.8425 | 1947.787 | 326.8425 | 973.8937 | 326.8425 | 649.2625 | 326.8425 | 486.9489 |
| 320 | 316.6287 | 2010.619 | 316.6287 | 1005.31 | 318.6287 | 670.2064 | 310.6287 | 502.8548 |
| 330 | 307.0339 | 2073.451 | 307.0339 | 1036.726 | 307.0339 | 891.1504 | 307.0339 | 518.3628 |
| 340 | 298.0035 | 2136.283 | 298.0035 | 1068.142 | 298.0035 | 712.0943 | 298.0035 | 534.0708 |
| 350 | 289.4891 | 2199.115 | 289.4891 | 1099.557 | 289.4891 | 733.0383 | 289.4891 | 549.7787 |
| 360 | 281.4477 | 2261.947 | 281.4477 | 1130.973 | 281.4477 | 753.9822 | 281.4477 | 565.4867 |
| 370 | 273.841 | 2324.779 | 273.841 | 1162.389 | 273.841 | 774.9262 | 273.841 | 581.1946 |
| 380 | 266.6347 | 2387.61 | 260.6347 | 1193.805 | 266.6347 | 795.8701 | 266.6347 | 596.9028 |
| 390 | 259.7979 | 2450.442 | 259.7979 | 1225.221 | 259.7979 | 816.8141 | 259.7979 | 612.6106 |
| 400 | 253.303 | 2513.274 | 253.303 | 1256.637 | 253.303 | 837.758 | 253.303 | 628.3185 |
| 410 | 247.1248 | 2576.108 | 247.1248 | 1288.063 | 247.1248 | 858.702 | 247.1248 | 644.0265 |
| 420 | 241.2909 | 2638.938 | 241.2409 | 1319.469 | 241.2409 | 879.6459 | 241.2409 | 659.7345 |
| 430 | 235.6307 | 2701.77 | 235.6307 | 1350.885 | 235.6307 | 900.5899 | 235.6307 | 675.4424 |
| 440 | 230.2754 | 2784.602 | 230.2754 | 1382.301 | 230.2754 | 921.5338 | 230.2754 | 691.1504 |
| 450 | 225.1582 | 2827.433 | 225.1582 | 1413.717 | 225.1582 | 942.4778 | 225.1582 | 706.8583 |
| 460 | 220.2634 | 2890.295 | 220.2634 | 1445.133 | 220.2634 | 963.4217 | 220.2634 | 722.5663 |
| 470 | 215.577 | 2953.097 | 215.577 | 1476.549 | 215.577 | 984.3657 | 215.577 | 738.2743 |

(continued)

| L[μH] | f=500[kHz] | | | | | | | |
|---|---|---|---|---|---|---|---|---|
| | R=0.5[Ω] | | R=1[Ω] | | R=1.5[Ω] | | R=2[Ω] | |
| | C[pF] | Q | C[pF] | Q | C[pF] | Q | C | Q |
| 480 | 211.0858 | 3015.929 | 211.0858 | 1607.964 | 211.0858 | 1005.31 | 211.0858 | 753.9822 |
| 490 | 206.7779 | 3078.761 | 206.7779 | 1539.38 | 206.7779 | 1026.254 | 206.7779 | 789.6902 |
| 500 | 202.6424 | 3141.593 | 202.6424 | 1570.796 | 202.6424 | 1047.198 | 202.6424 | 785.3982 |
| 510 | 198.669 | 3204.425 | 198.669 | 1602.212 | 198.689 | 1068.142 | 198.669 | 801.1061 |
| 520 | 194.8484 | 3267.256 | 194.8484 | 1833.628 | 194.8484 | 1089.085 | 194.8484 | 816.8141 |
| 530 | 191.172 | 3330.088 | 191.172 | 1665.044 | 191.172 | 1110.029 | 191.172 | 832.5221 |
| 540 | 187.6319 | 3392.92 | 187.6318 | 1696.46 | 187.6318 | 1130.973 | 187.6318 | 848.23 |
| 550 | 184.2203 | 3455.752 | 184.2203 | 1727.876 | 184.2203 | 1151.917 | 184.2203 | 863.938 |
| 560 | 180.9307 | 3518.584 | 180.9307 | 1759.292 | 180.9307 | 1172.861 | 180.9307 | 879.6459 |
| 570 | 177.7565 | 3581.416 | 177.565 | 1790.708 | 177.7565 | 1193.805 | 177.7565 | 895.3539 |
| 580 | 174.6917 | 3644.247 | 174.6917 | 1822.124 | 174.6917 | 1214.749 | 174.6817 | 911.0619 |
| 590 | 171.7308 | 3707.079 | 171.7308 | 1853.54 | 171.7308 | 1235.693 | 171.7308 | 926.7698 |
| 600 | 188.8686 | 3769.911 | 168.8686 | 1884.956 | 168.8686 | 1256.637 | 108.8686 | 942.4778 |
| 610 | 166.1003 | 3832.743 | 168.1003 | 1916.372 | 166.1003 | 1277.581 | 166.1003 | 958.1858 |
| 620 | 163.4213 | 3895.575 | 163.4213 | 1947.787 | 163.4213 | 1298.525 | 163.4213 | 973.8937 |
| 630 | 160.8273 | 3958.407 | 160.8273 | 1979.203 | 160.8273 | 1319.469 | 160.8273 | 989.6017 |
| 640 | 158.3143 | 4021.239 | 158.3143 | 2010.619 | 158.3143 | 1340.413 | 158.3143 | 1005.31 |
| 650 | 155.8787 | 4084.07 | 155.8787 | 2042.035 | 155.8787 | 1361.357 | 155.8787 | 1021.018 |
| 660 | 153.5169 | 4146.902 | 153.5169 | 2073.451 | 153.5169 | 1382.301 | 153.5169 | 1036.726 |
| 670 | 151.2256 | 4209.734 | 151.2256 | 2104.867 | 151.2256 | 1403.245 | 151.2258 | 1052.434 |
| 680 | 149.0017 | 4272.566 | 149.0017 | 2136.283 | 149.0017 | 1424.189 | 149.0017 | 1068.142 |
| 690 | 149.8423 | 4335.398 | 146.8423 | 2167.699 | 146.8423 | 1445.133 | 146.8423 | 1083.849 |
| 700 | 144.7445 | 4398.23 | 144.7445 | 2199.115 | 144.7445 | 1466.077 | 144.7445 | 1099.557 |

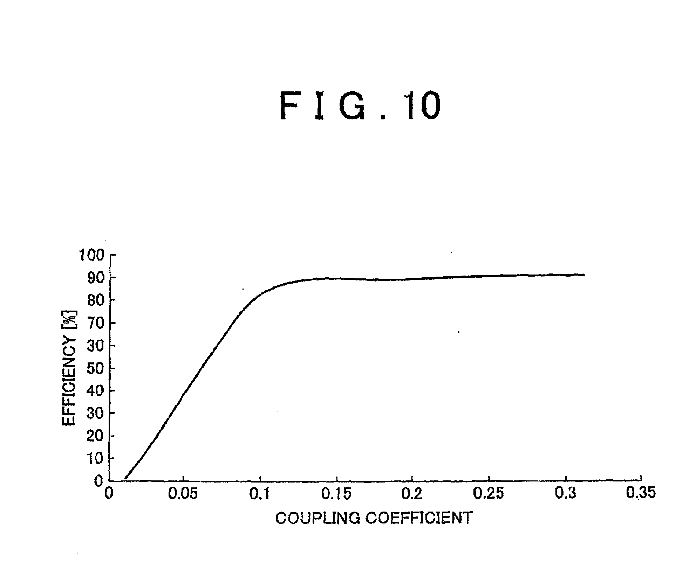

Next, in the electric power transmission system according to the embodiment of the invention, the range.within which a coupling coefficient k between the transmitting-side magnetic resonance antenna unit 120 and the receiving-side magnetic resonance antenna unit 220 mounted on the vehicle should fall will be described. FIG. 10 shows the measured results of a variation in transmission efficiency when the positional relationship between the transmitting-side magnetic resonance antenna unit 120 and the receiving-side magnetic resonance antenna unit 220 is shifted to vary the coupling coefficient k. According to FIG. 10, in the electric power transmission system according to the embodiment of the invention, it appears that a sufficient transmission efficiency is obtained even within the range in which the coupling coefficient k between the transmitting-side magnetic resonance antenna unit 120 and the receiving-side magnetic resonance antenna unit 220 is smaller than or equal to 0.3. As described above, the electric power transmission system according to the embodiment of the invention assumes that the Q factor is larger than or equal to 100, so, even when the coupling coefficient k is smaller than or equal to 0.3, it is possible to sufficiently clear the condition of the product of kQ, required in the wireless power transmission system according to the magnetic resonance method.

Next, a specific configuration of an antenna used in the thus configured electric power transmission system will be described. Hereinafter, an example in which the configuration of the aspect of the invention is applied to the receiving-side magnetic resonance antenna unit 220 will be described; however, the antenna according to the aspect of the invention may also be applied to the transmitting-side magnetic resonance antenna unit 120.

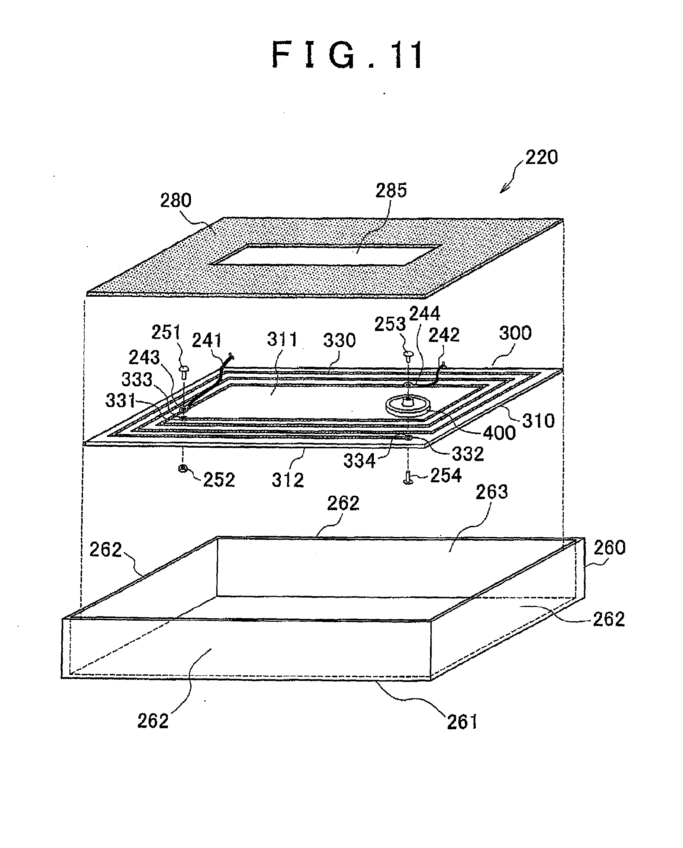

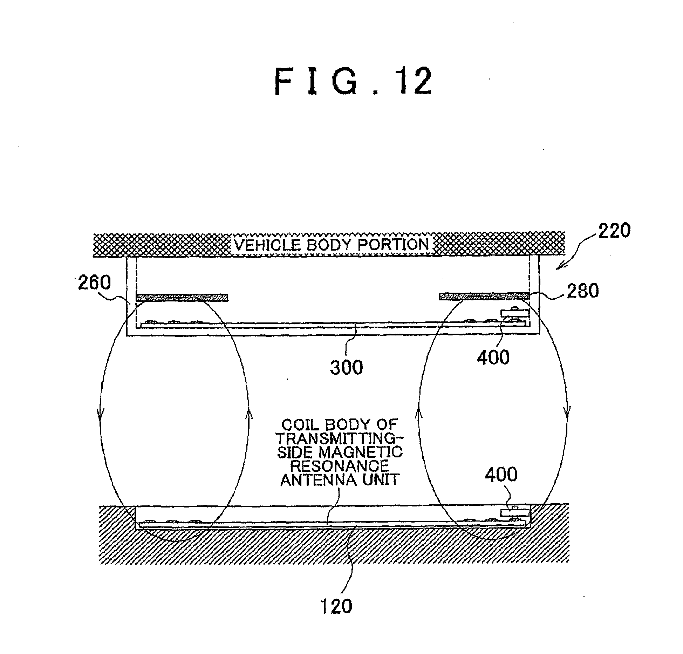

FIG. 11 is an exploded perspective view of a receiving-side magnetic resonance antenna unit 220 according to a first embodiment of the invention. In addition, FIG. 12 is a schematic cross-sectional view that shows how electric power is transferred via the receiving-side magnetic resonance antenna unit 220 according to the first embodiment of the invention. Note that, in the following embodiments, a coil unit 300 has a rectangular plate-like shape; however, the antenna according to the aspect of the invention is not limited to a coil having such a shape. For example, the coil unit 300 may have a circular plate-like shape, or the like.

The coil unit 300 functions as a magnetic resonance antenna unit in the receiving-side magnetic resonance antenna unit 220. The magnetic resonance antenna unit includes not only the inductance component of the coil unit 300 but also the capacitance component of a capacitor 400.

A resin case 260 is used to accommodate the coil unit 300 having the inductance component of the receiving-side magnetic resonance antenna unit 220. The resin case 260 is formed of a resin, such as polycarbonate, and has a box shape having an opening.

A side plate portion 262 extends from each side of a rectangular bottom plate portion 261 of the resin case 260 perpendicularly to the bottom plate portion 261. Then, an upper opening portion 263 surrounded by the side plate portions 262 is formed at the upper side of the resin case 260. In order to mount the resin case 260 on a vehicle body, a selected existing known method may be used. Note that a flange member, or the like, may be provided around the upper opening portion 263 so as to increase the ease of installation onto the vehicle body.

The coil unit 300 includes a rectangular plate-like glass epoxy base 310 and an electrically conductive portion. The electrically conductive portion is formed on the upper side and lower side of the base 310. More specifically, the base 310 has a first surface 311 as a major surface and a second surface 312 that is the back in relation to the first surface 311. A spiral first surface electrically conductive portion 330 is formed on the first surface 311 as a coil to thereby impart the inductance component to the receiving-side magnetic resonance antenna unit 220.

On the first surface 311 of the base 310, a first surface innermost end portion 331 and a first surface outermost end portion 332 are respectively provided at the radially inner side and outer side of the first surface electrically conductive portion 330 that forms the spiral coil.

An innermost end portion through-hole 333 that penetrates between the first surface 311 and the second surface 312 is provided at the first surface innermost end portion 331. An outermost end portion through-hole 334 that penetrates between the first surface 311 and the second surface 312 is provided at the first surface outermost end portion 332.

A conductive wire 241 and a conductive wire 242 electrically connect the receiving-side magnetic resonance antenna unit 220 to a rectifier unit 202. The conductive wire 241 is electrically connected to the first surface innermost end portion 331 of the first surface electrically conductive portion 330. Therefore, as shown in the drawing, the terminal 243 of the conductive wire 241 is arranged on the first surface innermost end portion 331, and a screw 251 is inserted from the side of the first surface 311 of the base 310 through the hole of the terminal 243 of the conductive wire 241 and the innermost end portion through-hole 333, and is then screwed into a nut 252 on the second surface 312 side of the base 310. By so doing, the conductive wire 241 is electrically conductively connected to the first surface innermost end portion 331, and is mechanically fixed.

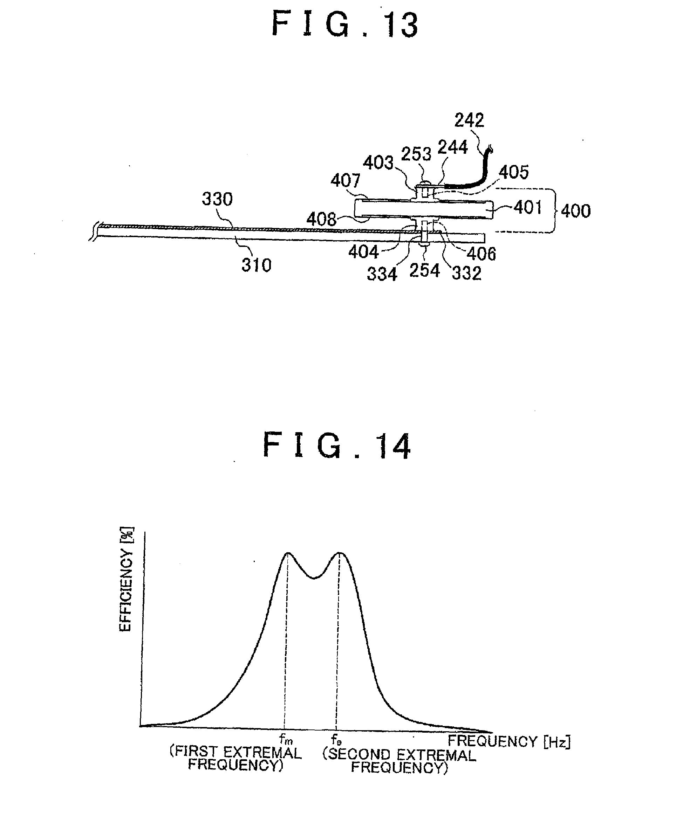

On the other hand, the capacitor 400 that is the capacitance component in the receiving-side magnetic resonance antenna unit 220 is directly fixed at the first surface outermost end portion 332. A structure of fixing the capacitor 400 at the first surface outermost end portion 332 will be described also with reference to FIG. 13. FIG. 13 is a diagram that illustrates the structure of mounting the capacitor 400 in the receiving-side magnetic resonance antenna unit 220 according to the first embodiment of the invention. FIG. 13 schematically shows the cross-sectional view of the capacitor 400 mounted at the first surface outermost end portion 332.

First, the outline of the capacitor 400 that can be suitably used in the receiving-side magnetic resonance antenna unit 220 according to the first embodiment of the invention will be described.

A metal first connection terminal portion 403 and a first thin-film electrode 407 made of a conductive material are arranged on one side of a dielectric 401 included in the capacitor 400, and a metal second connection terminal portion 404 and a second thin-film electrode 408 made of a conductive material are arranged on the other side of the dielectric 401. The metal first connection terminal portion 403 and first thin-film electrode 407 and the metal second connection terminal portion 404 and second thin-film electrode 408 sandwich the dielectric 401 to obtain a capacitance. In the receiving-side magnetic resonance antenna unit 220 according to the first embodiment of the invention, a dielectric material used for the dielectric 401 desirably contains a titanium oxide as a major component or contains barium titanate as a major component. These materials have a high dielectric constant, so the capacitor 400 that uses these materials has a high capacitance despite its compactness, and it is possible to reduce the volume of the receiving-side magnetic resonance antenna unit 220.

In addition, in the receiving-side magnetic resonance antenna unit 220 according to the first embodiment of the invention, a dielectric material used for the dielectric 401 desirably contains magnesium titanate as a major component or contains a steatite material as a major component. Such dielectric materials have a high dielectric constant, so the capacitor 400 that uses such dielectric materials has a high capacitance despite its compactness, and it is possible to reduce the volume of the receiving-side magnetic resonance antenna unit 220.

The metal first connection terminal portion 403 provided on one side of the capacitor 400 has a first threaded hole 405. The terminal 244 of the conductive wire 242 is arranged on the first threaded hole 405, and a screw 253 is threadably inserted through the hole of the terminal 244 of the conductive wire 242 and the first threaded hole 405. By so doing, the conductive wire 242 is electrically conductively connected and mechanically fixed to the first connection terminal portion 403 on the one side of the capacitor 400.

In addition, the metal second connection terminal portion 404 provided on the other side of the capacitor 400 has a second threaded hole 406. The second connection terminal portion 404 of the capacitor 400 is arranged on the first surface outermost end portion 332, and a screw 254 is inserted from the second surface 312 side through the outermost end portion through-hole 334 and the second threaded hole 406 to threadably mount the screw 254 in the second threaded hole 406. By so doing, the second connection terminal portion 404 of the capacitor 400 is electrically conductively connected to the first surface outermost end portion 332 of the first surface electrically conductive portion 330, and the capacitor 400 is mechanically fixed to the base 310.

The conductive wire 241 and the conductive wire 242 are respectively electrically connected to the first surface innermost end portion 331 at the radially inner side of the spiral first surface electrically conductive portion 330 and the first surface outermost end portion 332 at the radially outer side of the spiral first surface electrically conductive portion 330. By so doing, electric power received by the receiving-side magnetic resonance antenna unit 220 is conducted to the rectifier unit 202. The thus configured coil unit 300 is placed on the rectangular bottom plate portion 261 of the resin case 260, and is fixed to the bottom plate portion 261 by an appropriate fixing device.

With the antenna according to the first embodiment of the invention, the capacitor 400 is fixed to the first surface outermost end portion 332 of the first surface electrically conductive portion 330 that forms the coil. Therefore, with the thus configured antenna according to the first embodiment of the invention, there is no variation in reactance component at an electrical node between the coil and the capacitor 400, and there is no substantial resistance component at an electrical node between the coil and the capacitor 400, so the characteristic of the antenna is stable, and it is possible to efficiently transmit electric power.

A magnetic shield 280 is a plate-like magnetic material having a hole portion 285. A magnetic material, such as ferrite, may be used to form the magnetic shield 280. The magnetic shield 280 is fixed to the resin case 260 by an appropriate device so as to be arranged with a certain space above the coil unit 300. Owing to the above layout, magnetic lines of force generated by the transmitting-side magnetic resonance antenna unit 120 pass through the magnetic shield 280 at a high rate, and, in electric power transmission from the transmitting-side magnetic resonance antenna unit 120 to the receiving-side magnetic resonance antenna unit 220, the influence of the metallic components of the vehicle body on the magnetic lines of force is reduced.

In the antenna according to the first embodiment of the invention, the plate-like magnetic shield 280 arranged above the coil unit 300 desirably have the hole portion 285. By providing the magnetic shield 280 with the hole portion 285, loss in the magnetic shield 280 itself is reduced and it is made possible to maximize the shielding effect of the magnetic shield 280. In addition, in the case of the magnetic shield 280 having the hole portion 285, the area of the member is small and it is made possible to reduce costs of the antenna. It is preferable that the area of the hole portion 285 be such that the overlap between magnetic shield 280 and the electrically conducive portion 272 of the coil unit 300 when viewed in the laminated direction is not reduced.

Incidentally, in the antenna according to the first embodiment of the invention, the capacitor 400 is fixed to not the first surface innermost end portion 331 of the first surface electrically conductive portion 330 that forms the coil but the first surface outermost end portion 332 of the first surface electrically conductive portion 330. The reason will be described. FIG. 14 is a graph that shows an example of the frequency dependence of electric power transmission efficiency when the transmitting-side magnetic resonance antenna unit 120 is brought close to the receiving-side magnetic resonance antenna unit 220.

In the magnetic resonance wireless power transmission system, as shown in FIG. 14, there are two frequencies, that is, a first extremal frequency fm and a second extremal frequency fe, and, when electric power is transmitted, any one of these frequencies is desirably used.

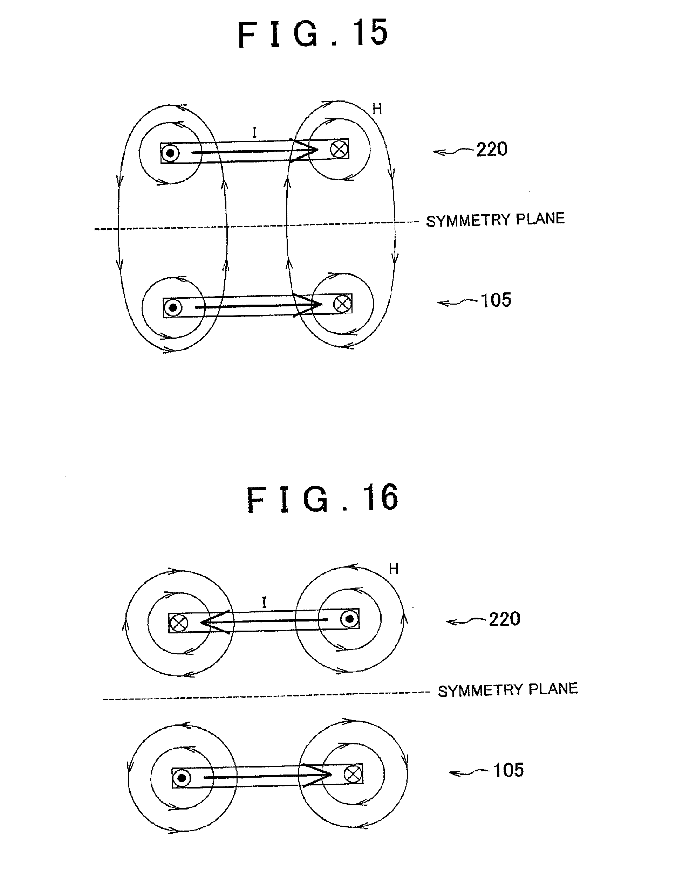

FIG. 15 is a diagram that schematically shows the states of current and electric field at the first extremal frequency. At the first extremal frequency, the current that flows through the coil of the transmitting-side magnetic resonance antenna unit 120 is substantially equal in phase to the current that flows through the coil of the receiving-side magnetic resonance antenna unit 220, the position at which magnetic field vectors are aligned is around the center of the coil of the transmitting-side magnetic resonance antenna unit 120 and the center of the coil of the receiving-side magnetic resonance antenna unit 220. This state is assumed as a situation that a magnetic wall that makes the direction of magnetic field perpendicular to the symmetry plane between the transmitting-side magnetic resonance antenna unit 120 and the receiving-side magnetic resonance antenna unit 220 is formed.

In addition, FIG. 16 is a diagram that schematically shows the states of current and electric field at the second extremal frequency. At the second extremal frequency, the current that flows through the transmitting-side magnetic resonance antenna unit 120 is substantially opposite in phase to the current that flows through the receiving-side magnetic resonance antenna unit 220, and the position at which magnetic vectors are aligned is around the symmetry plane of the coil of the transmitting-side magnetic resonance antenna unit 120 and the coil of the receiving-side magnetic resonance antenna unit 220. This state is assumed as a situation that an electric wall that makes the direction of magnetic field parallel to the symmetry plane between the transmitting-side magnetic resonance antenna unit 120 and the receiving-side magnetic resonance antenna unit 220 is formed.

Note that Takehiro IMURA and Yoichi HORI: "Wireless Power Transfer Using Electromagnetic Resonant Coupling", IEEJ Journal, Vol. 129, No. 7, 2009, Takehiro IMURA, Hiroyuki OKABE, Toshiyuki UCHIDA and Yoichi HORI: "Study of Magnetic and Electric Coupling for Contactless Power Transfer Using Equivalent Circuits", IEEJ Trans. IA, Vol. 130, No. 1, 2010, or the like, is applied to the concept of the above electric wall, magnetic wall, or the like, in this specification.

Even when electric power transmission is carried out at any one of the first extremal frequency fm and the second extremal frequency fe, magnetic lines of force may concentrate at the radially inner side of the coil. When the capacitor 400 is arranged at such a portion at which magnetic lines of force concentrate, eddy current is generated in the electrodes (the first connection terminal portion 403, the second connection terminal portion 404, the first thin-film electrode 407 and the second thin-film electrode 408) that constitute the capacitor 400, and the electrodes may generate heat. For this reason, in the antenna according to the first embodiment of the invention, the capacitor 400 is fixed to not the first surface innermost end portion 331 of the first surface electrically conductive portion 330 that forms the coil but the first surface outermost end portion 332 of the first surface electrically conductive portion 330.

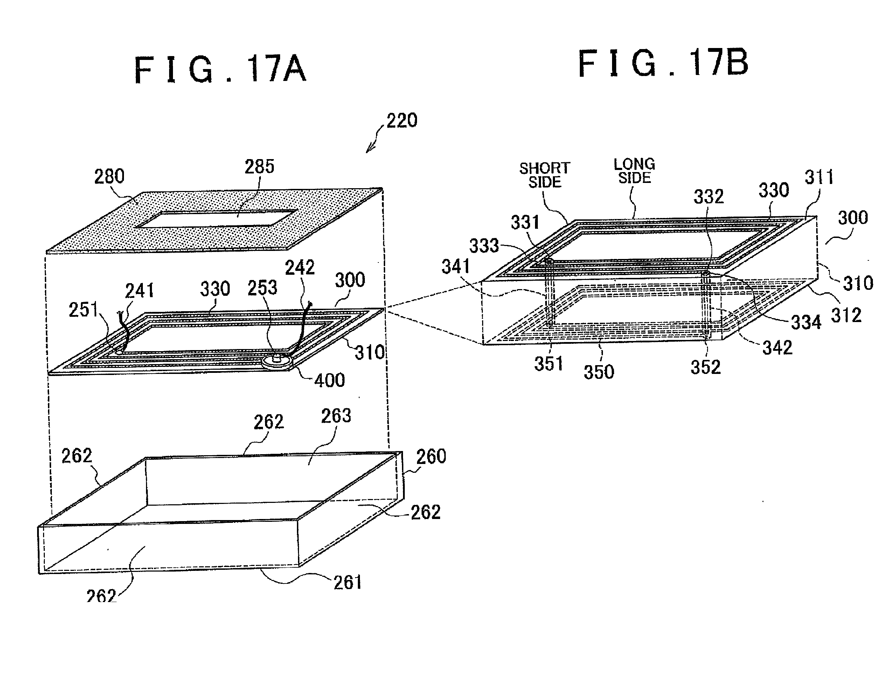

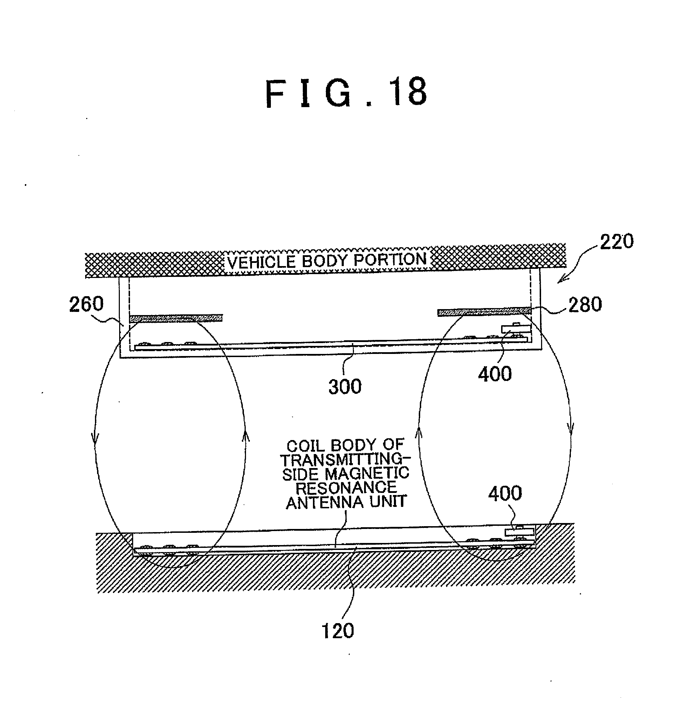

Next, other embodiments of the invention will be described. FIG. 17A and FIG. 17B are exploded perspective views of a receiving-side magnetic resonance antenna unit 220 according to a second embodiment of the invention. FIG. 18 is a schematic cross-sectional view that shows how electric power is transferred via the receiving-side magnetic resonance antenna unit 220 according to the second embodiment of the invention. The second embodiment differs from the first embodiment only in the structure of the coil unit 300, and a method of fixing the coil unit 300 to the capacitor 400 is the same as that of the first embodiment, so, hereinafter, the structure of the coil unit 300 unique to the second embodiment will be described.

FIG. 17A and FIG. 17B are exploded perspective views of the receiving-side magnetic resonance antenna unit 220 according to the second embodiment of the invention. In FIG. 17B, a base 310 that forms the coil unit 300 is enlarged in the thickness direction. In addition, FIG. 18 is a schematic cross-sectional view that shows how electric power is transferred via the receiving-side magnetic resonance antenna unit 220 according to the second embodiment of the invention. Note that, in the following embodiment, the coil unit 300 having a rectangular plate-like shape will be described as an example; however, the antenna according to the second embodiment of the invention is not limited to the coil having such a shape. For example, the coil unit 300 may have a circular plate-like shape, or the like.

The coil unit 300 includes a rectangular plate-like glass epoxy base 310 and electrically conductive portions. The electrically conductive portions are respectively formed on the upper side and lower side of the base 310. More specifically, the base 310 has a first surface 311 as a major surface and a second surface 312 that is the back in relation to the first surface 311. A spiral electrically conductive portion is formed on each of these first surface 311 and second surface 312 to thereby impart the inductance component to the receiving-side magnetic resonance antenna unit 220.

A spiral first surface electrically conductive portion 330 is formed on the first surface 311 of the base 310, and a first surface innermost end portion 331 and a first surface outermost end portion 332 are respectively provided at the radially inner side and radially outer side of the first surface electrically conductive portion 330.

Similarly, a spiral second surface electrically conductive portion 350 is formed on the second surface 312 of the base 310, and a second surface innermost end portion 351 and a second surface outermost end portion 352 are respectively provided at the radially inner side and radially outer side of the second surface electrically conductive portion 350.

Here, the first surface electrically conductive portion 330 and the second surface electrically conductive portion 350 just overlap each other when viewed transparently from the first surface 311 to the second surface 312. With the above configuration, the mutual inductance between the inductance component of the first surface electrically conductive portion 330 at the first surface 311 and the inductance component of the second surface electrically conductive portion 350 at the second surface 312 is easily adjusted or designed.

In the base 310, a first through-hole conducting portion 341 that penetrates between the first surface 311 and the second surface 312 conductively connects the first surface innermost end portion 331 to the second surface innermost end portion 351. In addition, a second through-hole conducting portion 342 that penetrates between the first surface 311 and the second surface 312 conductively connects the first surface outermost end portion 332 to the second surface outermost end portion 352.

A conductive wire 241 is electrically connected to the first surface innermost end portion 331 at the radially inner side of the above described spiral first surface electrically conductive portion 330, and a conductive wire 242 is electrically connected to the first surface outermost end portion 332 at the radially outer side of the first surface electrically conductive portion 330 via the capacitor 400. By so doing, electric power received by the receiving-side magnetic resonance antenna unit 220 is conducted to a rectifier unit 202. The thus configured coil unit 300 is placed on the rectangular bottom plate portion 261 of the resin case 260, and is fixed to the bottom plate portion 261 by an appropriate fixing device.

The thus configured antenna according to the second embodiment of the invention has the inductance component of the first surface electrically conductive portion 330 at the first surface 311, the inductance component of the second surface electrically conductive portion 350 at the second surface 312 and the inductance component of the mutual inductance between the first surface electrically conductive portion 330 and the second surface electrically conductive portion 350 overlapping the first surface electrically conductive portion 330. Therefore, the inductance is not reduced significantly, and, in addition, the first surface electrically conductive portion 330 and the second surface electrically conductive portion 350 are connected in parallel with each other, so the resistance of the electric circuit of the antenna is reduced. With the above configuration, Q (Quality Factor) is improved, so the transmission efficiency between the antennas is improved.

According to the above second embodiment, similar advantageous effects to those of the first embodiment is obtained, and the resistance value is reduced without significantly reducing the inductance to thereby make it possible to improve Q (Quality Factor), so the transmission efficiency between the antennas is improved.

Next, a third embodiment of the invention will be described. The third embodiment differs from the first embodiment and the second embodiment only in the structure of the coil unit 300, and a method of fixing the coil unit 300 to the capacitor 400 is the same as those of the first embodiment and second embodiment, so, hereinafter, the structure of the coil unit 300 unique to the third embodiment will be described.

In the second embodiment, the electrically conductive portions of the coil unit 300 are provided on both upper and lower sides of the base 310; whereas the third embodiment differs from the second embodiment in that an electrically conductive portion of the coil unit 300 is further provided in an intermediate layer of the base 310. Hereinafter, the different structure of the coil unit 300 will be described.

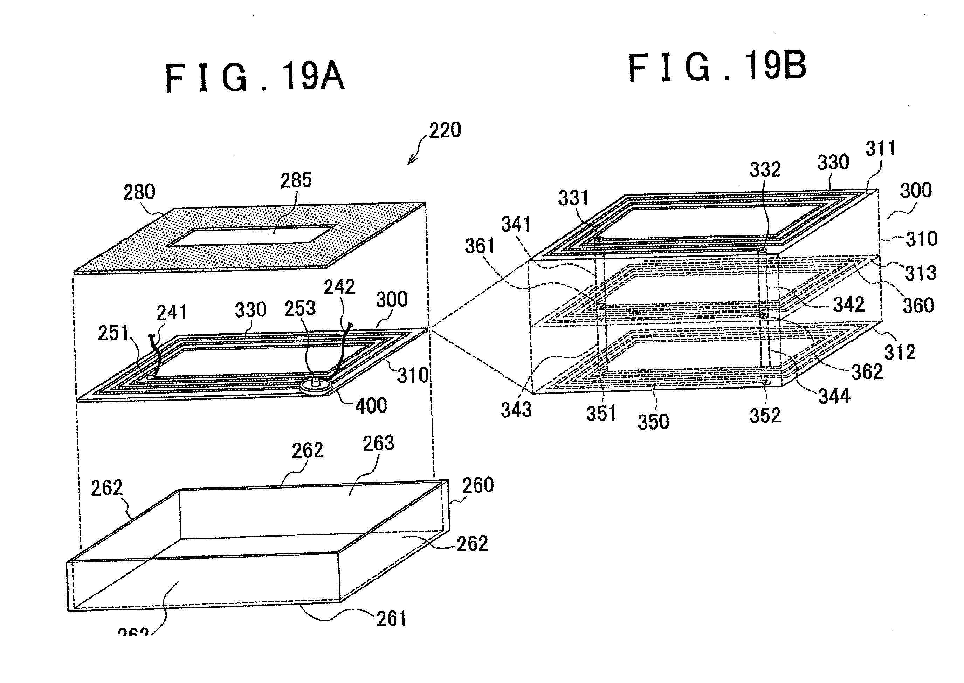

FIG. 19A and FIG. 19B are exploded perspective views of the receiving-side magnetic resonance antenna unit 220 according to the third embodiment of the invention. In FIG. 19B, a base 310 that forms the coil unit 300 is enlarged in the thickness direction.

The coil unit 300 includes a rectangular plate-like glass epoxy base 310 and electrically conductive portions. The electrically conductive portions are respectively formed on the upper side, on the lower side, and in the intermediate layer of the base 310. More specifically, the base 310 has a first surface 311 as a major surface, a second surface 312 that is the back in relation to the first surface 311, and an intermediate layer 313 between these first surface 311 and second surface 312. Spiral electrically conductive portions are respectively formed on the first surface 311, on the second surface 312, and in the intermediate layer 313 to thereby impart the inductance component to the receiving-side magnetic resonance antenna unit 220.

A spiral first surface electrically conductive portion 330 is formed on the first surface 311 of the base 310, and a first surface innermost end portion 331 and a first surface outermost end portion 332 are respectively provided at the radially inner side and radially outer side of the first surface electrically conductive portion 330.

Similarly, a spiral intermediate layer electrically conductive portion 360 is formed in the intermediate layer 313 of the base 310, and an intermediate layer innermost end portion 361 and an intermediate layer outermost end portion 362 are respectively provided at the radially inner side and radially outer side of the intermediate layer electrically conductive portion 360.

Similarly, a spiral second surface electrically conductive portion 350 is formed on the second surface 312 of the base 310, and a second surface innermost end portion 351 and a second surface outermost end portion 352 are respectively provided at the radially inner side and radially outer side of the second surface electrically conductive portion 350.

Here, the first surface electrically conductive portion 330, the intermediate layer electrically conductive portion 360, and the second surface electrically conductive portion 350 coincide with each other when viewed transparently from the first surface 311 to the second surface 312. With the above configuration, the mutual inductance of the inductance component of the first surface electrically conductive portion 330 at the first surface 311, the inductance component of the intermediate layer electrically conductive portion 360 in the intermediate layer 313, and the inductance component of the second surface electrically conductive portion 350 at the second surface 312 is easily adjusted or designed.

In the base 310, a first through-hole conducting portion 341 that penetrates between the first surface 311 and the intermediate layer 313 conductively connects the first surface innermost end portion 331 to the intermediate layer innermost end portion 361. In addition, a second through-hole conducting portion 342 that penetrates between the first surface 311 and the intermediate layer 313 conductively connects the first surface outermost end portion 332 to the intermediate layer outermost end portion 362.

In addition, a third through-hole conducting portion 343 that penetrates between the intermediate layer 313 and the second surface 312 conductively connects the intermediate layer innermost end portion 361 to the second surface innermost end portion 351. In addition, a fourth through-hole conducting portion 344 that penetrates between the intermediate layer 313 and the second surface 312 conductively connects the intermediate layer outermost end portion 362 to the second surface outermost end portion 352.

According to the third embodiment having the thus configured coil unit 300 as well, similar advantageous effects to those of the above described embodiments are obtained. Note that, in the third embodiment, the electrically conductive portions are respectively formed at the three layers, that is, the first surface 311, the intermediate layer 313 and the second surface 312, and the respective end portions of the electrically conductive portions are conductively connected to one another by the through-hole conducting portions that penetrate the base; instead, two or more intermediate layers may be provided so as to provide four or more layers in which the electrically conductive portion is provided.

Note that the intermediate layer 313 is buried in the base; whereas the first surface 311 and the second surface 312 are exposed. Therefore, among the bases, a base having an exposed surface, such as the first surface 311 and the second surface 312, on which the electrically conductive portion is provided may be regarded as an "exposed base".

In addition, in the above embodiments, the base 310 is formed of glass epoxy resin; instead, a ceramic base having a higher heat radiation effect may be used, and, furthermore, a base, in which an insulation film is formed on a metallic base, such as an aluminum base, may be used. Needless to say, one using a flexible printed board or the like may be used as the base.

According to the above third embodiment, similar advantageous effects to those of the first embodiment are obtained, and the resistance value is reduced without significantly reducing the inductance to thereby make it possible to improve Q (Quality Factor), so the transmission efficiency between the antennas is improved.

An electric power transmission system includes: a transmitting-side system that includes switching elements (SW1 and SW2) that convert a direct-current voltage to an alternating-current voltage and that output the alternating-current voltage and a transmitting-side magnetic resonance antenna unit (120) that has a first inductor (121) and a first capacitor (122) directly coupled to each other and to which the output alternating-current voltage is input; and a receiving-side system that includes a second inductor (221) and a second capacitor (222) directly coupled to each other and that resonates with the transmitting-side magnetic resonance antenna unit (120) via electromagnetic field to thereby receive electric energy output from the transmitting-side magnetic resonance antenna unit (120).

**Claims**

1. An electric power transmission system **characterized by** comprising:

   a transmitting-side system that includes: switching elements (SW1 to SW4) that convert a direct-current voltage to an alternating-current voltage and that output the alternating-current voltage; and a transmitting-side magnetic resonance antenna unit (120) that includes a first inductor (121) and a first capacitor (122) directly coupled to each other and to which the output alternating-current voltage is input; and
   a receiving-side system that includes: a receiving-side magnetic resonance antenna unit (220) that has a second inductor (221) and a second capacitor (222) directly coupled to each other and that resonates with the transmitting-side magnetic resonance antenna unit (120) via electromagnetic field to thereby receive electric energy output from the transmitting-side magnetic resonance antenna unit (120).

2. The electric power transmission system according to claim 1, wherein
   the switching elements (SW1 to SW4) constitute an inverter circuit, and
   the transmitting-side magnetic resonance antenna unit (120) is directly coupled to the inverter circuit.

3. The electric power transmission system according to claim 1 or 2, wherein
   the receiving-side system further includes a rectifier (223) that rectifies an output from the receiving-side magnetic resonance antenna unit (220), and
   the receiving-side magnetic resonance antenna unit (220) is directly coupled to the rectifier (223).

4. The electric power transmission system according to any one of claims 1 to 3, wherein
   the transmitting-side magnetic resonance antenna unit (120) oscillates by resonance between the first inductor (121) and the first capacitor (122), and
   the receiving-side magnetic resonance antenna unit (220) receives electric energy from the transmitting-side magnetic resonance antenna unit (120) by resonance between the second inductor (221) and the second capacitor (222).

5. The electric power transmission system according to any one of claims 1 to 4, wherein
   the first inductor (121) of the transmitting-side magnetic resonance antenna unit (120) and the second inductor (221) of the receiving-side magnetic resonance antenna unit (220) have the same inductive component, and
the first capacitor (122) of the transmitting-side magnetic resonance antenna unit (120) and the second capacitor
(222) of the receiving-side magnetic resonance antenna unit (220) have the same capacitive component.

6.  The electric power transmission system according to any one of claims 1 to 5, wherein the switching elements (SW1
    to SW4) convert a direct-current voltage to a rectangular wave alternating-current voltage and output the rectangular
    wave alternating-current voltage.

7.  The electric power transmission system according to any one of claims 1 to 6, wherein the switching elements (SW1
    to SW4) constitute a half-bridge inverter.

8.  The electric power transmission system according to any one of claims 1 to 7, wherein the switching elements (SW1
    to SW4) constitute a full-bridge inverter.

9.  The electric power transmission system according to claim 7 or 8, wherein the inverter operates in a voltage mode.

10. The electric power transmission system according to any one of claims 1 to 9, wherein the transmitting-side magnetic
    resonance antenna unit (120) and the receiving-side magnetic resonance antenna unit (220) resonate with each
    other at a frequency of several hundreds of kHz to several thousands of kHz to thereby cause the receiving-side
    magnetic resonance antenna unit (220) to receive electric energy output from the transmitting-side magnetic resonance antenna unit (120).

11. An electric power transmission system **characterized by** comprising:

    a transmitting-side system that includes: switching elements (SW1 to SW4) that convert a direct-current voltage
    to an alternating-current voltage and that output the alternating-current voltage; and a transmitting-side magnetic
    resonance antenna unit (120) to which the output alternating-current voltage is input; and
    a receiving-side system that includes: a receiving-side magnetic resonance antenna unit (220) that resonates
    with the transmitting-side magnetic resonance antenna unit (120) via electromagnetic field to thereby receive
    electric energy output from the transmitting-side magnetic resonance antenna unit (120), wherein
    the transmitting-side magnetic resonance antenna unit (120) includes a first inductor (121) having a predetermined-inductive component and a first capacitor (122) having a predetermined capacitive component,
    the inductive component of the transmitting-side magnetic resonance antenna unit (120) is larger than or equal
    to 50 μH and smaller than or equal to 500 μH, and
    the capacitive component of the transmitting-side magnetic resonance antenna unit (120) is larger than or equal
    to 200 pF and smaller than or equal to 3000 pF.

12. The electric power transmission system according to claim 11, wherein a coupling coefficient between the transmitting-side magnetic resonance antenna unit (120) and the receiving-side magnetic resonance antenna unit (220) is
    smaller than or equal to 0.3.

13. An antenna (120 or 220) **characterized by** comprising:

    a base (310) having a first surface (311) and a second surface (312) that is a back in relation to the first surface
    (311);
    a first surface electrically conductive portion (330) that is formed on the first surface (311) of the base (310) and
    that forms a coil; and
    a capacitor (400) that is connected to the coil and that is placed on the first surface (311).

14. The antenna (120 or 220) according to claim 13, wherein
    the first surface electrically conductive portion (330) has a first surface innermost end portion (331) and a first surface
    outermost end portion (332), and
    the capacitor (400) is connected to the first surface outermost end portion (332) of the first surface electrically
    conductive portion (330) that forms the coil.

15. The antenna (120 or 220) according to claim 14, further comprising:

    a second surface electrically conductive portion (350) that is formed on the second surface (312) of the base (310), that has a second surface innermost end portion (351) and a second surface outermost end portion (352), that forms a coil and that overlaps with the first surface electrically conductive portion (330) when viewed transparently from the first surface (311) to the second surface (312);

a first through-hole conducting portion (341) that penetrates between the first surface (311) and the second surface (312) to conductively connect the first surface innermost end portion (331) to the second surface innermost end portion (351); and

a second through-hole conducting portion (342) that penetrates between the first surface (311) and the second surface (312) to conductively connect the first surface outermost end portion (332) to the second surface outermost end portion (352).

16. An antenna (120 or 220) **characterized by** comprising:

at least two laminated bases (310);
a plurality of electrically conductive portions (330, 360, 350), each of which has an innermost end portion (331, 361, 351) and an outermost end portion (332, 362, 352) and forms a coil, wherein adjacent two of the plurality of electrically conductive portions (330, 360, 350) are laminated via a corresponding one of the at least two bases (310);
a capacitor (400) that is connected to the outermost end portion (332, 362, 352) of an exposed one (310) of the at least two bases (310) and that is placed on the exposed base (310);
a first through-hole conducting portion (341, 343) that penetrates the at least two bases (310) to conductively connect the innermost end portions (331, 361, 351) of the respective electrically conductive portions (330, 360, 350) to one another; and
a second through-hole conducting portion (342, 344) that penetrates the at least two bases (310) to conductively connect the outermost end portions (332, 362, 352) of the respective electrically conductive portions (330, 360, 350) to one another, wherein
the plurality of electrically conductive portions (330, 360, 350) all overlap one another when viewed transparently in a direction in which the plurality of electrically conductive portions (330, 360, 350) are laminated.

17. The antenna (120 or 220) according to any one of claims 13 to 16, wherein a dielectric material of the capacitor (400) contains at least one selected from the group consisting of a titanium oxide, magnesium titanate, barium titanate and a steatite material.

18. The antenna (120 or 220) according to any one of claims 13 to 17, wherein the base (310) and the capacitor (400) are accommodated in a common case (260).

19. An antenna (120 or 220) **characterized by** comprising:

an electrically conductive portion (330) that has an innermost end portion (331) and an outermost end portion (332) and that forms a spiral coil; and
a capacitor (400) that is fixed to the outermost end portion (332).

20. An antenna (120 or 220) **characterized by** comprising:

a base (310);
an electrically conductive portion (330) that is formed on one surface (311) of the base (310), that has an innermost end portion (331) and an outermost end portion (332) and that forms a coil; and
a capacitor (400) that is fixed to the outermost end portion (332).

21. The antenna (120 or 220) according to claim 19 or 20, wherein a dielectric material of the capacitor (400) contains at least one selected from the group consisting of a titanium oxide, magnesium titanate, barium titanate and a steatite material.

22. The antenna (120 or 220) according to any one of claims 19 to 21, wherein the base (310) and the capacitor (400) are accommodated in a common case (260).

# FIG.1

ELECTRIC POWER TRANSMITTING-SIDE SYSTEM

# FIG.2

VEHICLE

INTERFACE UNIT | RECEIVING-SIDE MAIN CONTROL UNIT (VEHICLE SIDE) | TRANSMITTING-SIDE MAIN CONTROL UNIT (CHARGING FACILITY)

USER INPUTS INSTRUCTIONS ON CHARGING | S11

OPERATION DATA →

COMPUTE AMOUNT OF ELECTRIC POWER REQUIRED FROM BATTERY MANAGEMENT DATA | S21

START MONITORING SURROUNDINGS | S22

TRANSMIT CHARGING REQUEST BY COMMUNICATION UNIT | S23

CHARGING START REQUEST →

S31 | RECEIVE CHARGING REQUEST

S32 | ISSUE CHARGING START INSTRUCTIONS TO CHARGING ROUTINE

S33 | TRANSMIT CHARGING END NOTIFICATION

← CHARGING END NOTIFICATION

RECEIVE CHARGING END NOTIFICATION BY COMMUNICATION UNIT | S24

END MONITORING SURROUNDINGS | S25

← DISPLAY INSTRUCTION DATA

DISPLAY COMPLETION OF CHARGING | S12

# FIG.3

START — S100

S101

HAVE CHARGING START INSTRUCTIONS BEEN ISSUED ? — NO

YES

MINIMUM OUTPUT (TEMPORARY OUTPUT) — S102

START MONITORING OUTPUT — S103

SWEEP FREQUENCY, AND SELECT OPTIMAL FREQUENCY — S104

S105 — REGULAR OUTPUT e.g.) 1.5 kw FB CONTROL

e.g.) DETECT IMPEDANCE VARIATION DUE TO FOREIGN MATTER

S106

YES — HAS ABNORMALITY BEEN DETECTED ?

NO

S107

HAS CHARGING BEEN COMPLETED OR HAVE CHARGING END INSTRUCTIONS BEEN ISSUED ? — NO

S109

ERROR INDICATION

YES

S110

ABNORMAL END

END MONITORING OUTPUT — S108

END — S111

# F I G . 4

# F I G . 5

# F I G . 6

# FIG.7

# FIG.8

DEAD TIME

# FIG.9A

# FIG.9B

# FIG.9C

# F I G . 10

# F I G . 11

# F I G . 12

VEHICLE BODY PORTION — 220

260

280

300

400

COIL BODY OF
TRANSMITTING-
SIDE MAGNETIC
RESONANCE
ANTENNA UNIT

400

120

# FIG.13

# FIG.14

# F I G . 15

H

I

← 220

— — — — — — — — — — SYMMETRY PLANE

← 105

# F I G . 16

H

I

← 220

— — — — — — — — — — SYMMETRY PLANE

← 105

FIG.17A

FIG.17B

EP 2 455 253 A2

# F I G . 18

VEHICLE BODY PORTION
220
260
280
300
400
400

COIL BODY OF
TRANSMITTING-
SIDE MAGNETIC
RESONANCE
ANTENNA UNIT

120

FIG. 19A

FIG. 19B

# FIG. 20A

TRANSMITTING-SIDE
MAGNETIC RESONANCE
ANTENNA

TRANSMITTING-SIDE
EXCITING COIL

RECEIVING-SIDE
MAGNETIC RESONANCE
ANTENNA

RECEIVING-SIDE
EXCITING COIL

SINUSOIDAL
WAVE

LOAD

GND

STRAY
CAPACITANCE

STRAY
CAPACITANCE

ELECTROMAGNETIC
INDUCTION

ELECTROMAGNETIC
INDUCTION

# FIG. 20B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009501510 PCT
- JP 2009501510 A
- JP 2010074937 A

**Non-patent literature cited in the description**

- **TAKEHIRO IMURA ; YOICHI HORI.** Wireless Power Transfer Using Electromagnetic Resonant Coupling. *IEEJ Journal,* 2009, vol. 129 (7
- **TAKEHIRO IMURA ; HIROYUKI OKABE ; TOSHI-YUKI UCHIDA ; YOICHI HORI.** Study of Magnetic and Electric Coupling for Contactless Power Transfer Using Equivalent Circuits. *IEEJ Trans. IA,* 2010, vol. 130 (1